(19) Europäisches Patentamt
European Patent Office
Office européen des brevets

(11) **EP 4 718 332 A1**

(12) **EUROPEAN PATENT APPLICATION**
published in accordance with Art. 153(4) EPC

(43) Date of publication:
**01.04.2026 Bulletin 2026/14**

(21) Application number: **24830138.4**

(22) Date of filing: **30.04.2024**

(51) International Patent Classification (IPC):
**G06N 3/092** (2023.01)

(52) Cooperative Patent Classification (CPC):
Y02D 10/00

(86) International application number:
**PCT/CN2024/090884**

(87) International publication number:
**WO 2025/001490 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.06.2023 CN 202310802114**

(71) Applicant: **Huawei Technologies Co., Ltd.**
**Shenzhen, Guangdong 518129 (CN)**

(72) Inventors:
• **XIA, Wei**
**Shenzhen, Guangdong 518129 (CN)**

• **WANG, Hangyu**
**Shanghai 200240 (CN)**
• **TANG, Ruiming**
**Shenzhen, Guangdong 518129 (CN)**
• **ZHANG, Weinan**
**Shanghai 200240 (CN)**
• **YU, Yong**
**Shanghai 200240 (CN)**

(74) Representative: **Pfenning, Meinig & Partner mbB**
**Patent- und Rechtsanwälte**
**Theresienhöhe 11a**
**80339 München (DE)**

(54) **ONLINE TEST METHOD AND APPARATUS**

(57) This application provides an online test method and apparatus, to perform reinforcement learning from a plurality of dimensions, so as to select test questions for a user from the plurality of dimensions to ensure that a test result can better mirror an actual capability of the user. The method includes: obtaining a test question library, where the test question library includes a plurality of collected test questions; and obtaining a test model based on the test question library and a policy optimization algorithm, where the test model may be used to select at least one test question from the test question library in an online test process, the test model may specifically include a state encoder and a recommender, the state encoder is configured to obtain a difference between input test questions to generate a state code, the recommender may be configured to output a test question based on the state code and an optimization objective, the optimization objective includes at least one of novelty or diversity, a factor for measuring the novelty includes an exposure rate, and a factor for measuring the diversity includes whether there is an added knowledge point.

FIG. 4

## Description

This application claims priority to Chinese Patent Application No. 202310802114.7, filed with the China National Intellectual Property Administration on June 30, 2023 and entitled "ONLINE TEST METHOD AND APPARATUS", which is incorporated herein by reference in its entirety.

## TECHNICAL FIELD

This application relates to the test field, and in particular, to an online test method and apparatus.

## BACKGROUND

With rapid development of internet technologies, people gradually get rid of a paper- and-pen test mode of repetitive work, and therefore computerized adaptive testing (Computerized Adaptive Testing, CAT) is proposed. CAT is an online test that can accurately measure capabilities of students by continuously providing most appropriate test questions to the students. CAT has been applied to many large-scale education and examination scenarios, for example, TOEFL and postgraduate entrance examinations. Basic logic of CAT is "to obtain most comprehensive capability evaluation of testees with a minimum quantity of questions". For example, for a testee whose capability level is low, a highly difficult question cannot help evaluate a capability level of the testee. Questions with corresponding difficulty can be provided based on the capability levels of the testees, to obtain more accurate tests. This avoids selecting questions that are greatly different from capabilities of the testees, avoids waste of question-making opportunities, and avoids "test-oriented rote practice".

In existing online test manners, high-quality test question selection can be implemented. However, selected test questions may not mirror actual capabilities of the testees if only quality of test questions is focused.

## SUMMARY

This application provides an online test method and apparatus, to perform reinforcement learning from a plurality of dimensions, so as to select test questions for a user from the plurality of dimensions to ensure that a test result can better mirror an actual capability of the user.

In view of this, according to a first aspect, this application provides an online test method, including: obtaining a test question library, where the test question library includes a plurality of collected test questions; and obtaining a test model based on the test question library and a policy optimization algorithm, where the test model may be used to select at least one test question from the test question library in an online test process, the test model may specifically include a state encoder and a recommender, the state encoder is configured to obtain a difference between input test questions to generate a state code, the recommender may be configured to output a test question based on the state code and an optimization objective, the optimization objective includes at least one of novelty or diversity, a factor for measuring the novelty includes an exposure rate, and a factor for measuring the diversity includes whether there is an added knowledge point.

In an implementation of this application, in an online test scenario, a test question may be selected from dimensions such as novelty and/or diversity, to select a test question with the novelty and/or the diversity for a user, so that the selected test question can more comprehensively test an answering capability of the user.

In addition, the novelty means that a knowledge point corresponding to the test question selected by the test model has a novel feature, and the novelty may be measured based on an exposure rate of the knowledge point. For example, in each round of question selection, the test model needs to select, for the user, a test question corresponding to a knowledge point with a low exposure rate. The diversity means that the knowledge point of the test question selected by the test model has a diverse feature, and the diversity may be measured based on coverage of the knowledge point. For example, the test model may select, for the user, a test question containing more knowledge points.

In a possible implementation, an optimization objective of the policy optimization algorithm may include a reward function used to update the test model. Therefore, when the test model is updated, a required optimization objective may be set for learning, to obtain a test model that can output a test question matching the optimization objective.

In a possible implementation, the foregoing reward function may include a reward function in a plurality of dimensions, the reward function in the plurality of dimensions is used to update the test model, and the plurality of dimensions may include but are not limited to at least two of quality, diversity, and novelty. The novelty indicates controlling an exposure rate of an output test question, and the diversity indicates that a plurality of output test questions contain a plurality of knowledge points. In other words, the test model may be optimized based on the exposure rate and knowledge point content of the test question to output a test question with novelty or diversity.

In an implementation of this application, the reward function in the plurality of dimensions is set in a reinforcement learning process, to update the test model in the plurality of dimensions, so that an output result of the test model has better performance in the plurality of dimensions, to obtain a test question that better adapts to an actual capability of the user, and the selected test question can better mirror an actual capability of a testee. In a possible implementation, the reward function in the plurality of dimensions may include but is not limited to a quality reward, a diversity reward, and/or a novelty reward. The quality reward is determined based on output accuracy of testing of the test model in the test question library. The diversity reward is determined based on whether a new knowledge point is added to a test question selected by the test model from the test question library for a current time relative to a test question selected by the test model from the test question library for at least one previous time. The novelty reward is determined based on whether the test question selected by the test model from the test question library for the current time is a hot test question. The test question in the test question library is classified into the hot test question and a non-hot test question, and a quantity of historical selection times of the hot test question is greater than a quantity of historical selection times of the non-hot test question.

Therefore, in this implementation of this application, the test model may be updated in dimensions such as quality, novelty, or diversity, so that the test question output by the test model has better quality, and the test model can output a test question with higher novelty and diversity, to more comprehensively mirror the capability of the testee.

In a possible implementation, the test model may further include a relationship-aware aggregator, an input of the relationship-aware aggregator includes at least one of a prerequisite graph or a correlation graph, the relationship-aware aggregator is configured to obtain an embedding representation of a relationship between knowledge points or an embedding representation of a relationship between a test question and a knowledge point based on the input, the prerequisite graph represents a sequential relationship between knowledge points in an input test question, and the correlation graph represents a correlation relationship between a test question and a knowledge point.

The state encoder is configured to: extract an association relationship between a test question and a knowledge point based on data output by the relationship-aware aggregator, and generate the state code based on the association relationship.

In this implementation of this application, the relationship-aware aggregator is further disposed in the test model, to extract the association relationship between the test question and the knowledge point or the association relationship between the knowledge points from a graph structure, and more fully explore the relationship between the test question and the knowledge point or the relationship between the knowledge points, thereby improving accuracy of subsequent test question selection.

In a possible implementation, obtaining the test model based on the test question library and the policy optimization algorithm includes: selecting the at least one test question from the test question library via the test model; and performing reinforcement learning on the test model based on an answering record of the at least one test question, to obtain the test model obtained through the reinforcement learning.

In this implementation of this application, in the reinforcement learning process, the reinforcement learning may be performed based on an answering record of the user for the test question, so that the reinforcement learning is performed based on an actual answering capability of the user, to improve output accuracy of the test model.

In a possible implementation, the foregoing method may further include: obtaining the answering record of a user for the at least one test question from the test question library; or receiving online answering data obtained by performing an operation on the at least one test question by the user, and obtaining the answering record of the user for the at least one test question based on the online answering data.

In this implementation of this application, the answering record of the user used in the reinforcement learning process may be obtained through offline collection, or may be obtained through online answering of the user. Therefore, both offline learning and online learning can be implemented, so that the test model can be adaptively updated based on the answering capability of the user, to improve output accuracy of the test model.

In a possible implementation, the test question library is divided into a candidate set and a meta-question set, the test question selected for the user is a test question in the candidate set, the test question selected for the user is further used to train the test model, and the meta-question set is used to calculate a reward in the plurality of dimensions. The reinforcement learning includes a training phase and a test phase. The candidate set is used to test the test model in the training phase, and the meta-question set is used to calculate the reward in the plurality of dimensions in the verification phase.

Therefore, in this implementation of this application, the reward may be calculated in the plurality of dimensions in the verification phase, to update the test model in the plurality of dimensions. In this way, when selecting the test question for the user, the test model may consider in the plurality of dimensions, to output the test question that better mirrors the actual capability of the user.

In a possible implementation, the reinforcement learning may specifically include: in the test phase, selecting the at least one test question from the candidate set via the test model, and after receiving a response of the user to the at least one test question, obtaining a capability evaluation value based on the response of the user to the at least one test question, where the capability evaluation value represents a degree of correctness of answering, by the user, a test question filtered for the user; and in the verification phase, calculating a reward in the plurality of dimensions based on the capability evaluation value and the verification set, and updating the test model based on the reward in the plurality of dimensions, to obtain the test model obtained through current iterative learning.

Therefore, in this implementation of this application, the reward may be calculated in the plurality of dimensions in the verification phase, to update the test model in the plurality of dimensions. In this way, when selecting the test question for the user, the test model may consider in the plurality of dimensions, to output the test question that better mirrors the actual capability of the user.

In a possible implementation, obtaining the test model based on the test question library and the policy optimization algorithm may further include: performing supervised learning based on the test question library, to obtain the test model. The test question library includes label data labeled with the diversity and/or the novelty. The supervised learning includes performing supervised learning on an initial test model based on the label data, to obtain the trained test model.

In this implementation of this application, in addition to the reinforcement learning, the supervised learning may also be performed to obtain the test model, so that the test model has stronger generalization. In addition, training is performed based on the label data labeled with the diversity and/or the novelty, so that a result that the user expects to output can be obtained. This improves novelty and/or diversity of the output result of the test model.

In a possible implementation, the state encoder is specifically configured to obtain the difference between the input test questions and at least one capability evaluation value corresponding to the user to generate the state code, where the capability evaluation value corresponding to the user may be specifically calculated based on an answering record of the user.

Therefore, when performing encoding, the state encoder may further perform state encoding based on the capability of the user, so that the obtained state code is consistent with the actual answering capability of the user. This improves accuracy of subsequent test question selection.

According to a second aspect, this application provides an online test apparatus, including:

an obtaining module, configured to obtain a test question library, where the test question library includes a plurality of collected test questions; and

a processing module, configured to obtain a test model based on the test question library and a policy optimization algorithm, where the test model is used to select at least one test question from the test question library, the test model includes a state encoder and a recommender, the state encoder is configured to obtain a difference between input test questions to generate a state code, the recommender is configured to output a test question based on the state code and an optimization objective, the optimization objective includes at least one of novelty or diversity, a factor for measuring the novelty includes an exposure rate, and a factor for measuring the diversity includes whether there is an added knowledge point.

In a possible implementation, the optimization objective of the policy optimization algorithm includes a reward function in a plurality of dimensions that is used to update the test model.

In a possible implementation, the reward function in the plurality of dimensions is used to update the test model. The plurality of dimensions include quality, diversity, and novelty. The novelty indicates controlling an exposure rate of an output test question, and the diversity indicates that a plurality of output test questions contain a plurality of knowledge points. In other words, the test model may be optimized based on the exposure rate and knowledge point content of the test question to output a test question with novelty or diversity.

In a possible implementation, the processing module is specifically configured to: select the at least one test question from the test question library via the test model; and perform reinforcement learning on the test model based on an answering record of the at least one test question, to obtain the test model obtained through the reinforcement learning.

In a possible implementation, the obtaining module is further configured to: obtain the answering record of the at least one test question from the test question library; or receive online answering data obtained by performing an operation on the at least one test question by the user, and obtain the answering record of the user for the at least one test question based on the online answering data.

In a possible implementation, the test model further includes a relationship-aware aggregator, an input of the relationship-aware aggregator includes at least one of a prerequisite graph or a correlation graph, the relationship-aware aggregator is configured to obtain an embedding representation of a relationship between knowledge points or an embedding representation of a relationship between a test question and a knowledge point based on the at least one of the prerequisite graph or a correlation graph, the prerequisite graph represents a sequential relationship between knowledge points in an input test question, and the correlation graph represents a correlation relationship between a test question and a knowledge point. The state encoder is configured to: extract an association relationship between a test question and a knowledge point based on data output by the relationship-aware aggregator, and generate the state code based on the association relationship.

In a possible implementation, the reward function in the plurality of dimensions includes a function corresponding to at least one of a quality reward, a diversity reward, or a novelty reward. The quality reward is determined based on output accuracy of testing of the test model in the test question library. The diversity reward is determined based on whether a new knowledge point is added to a test question selected by the test model from the test question library for a current time relative to a test question selected by the test model from the test question library for at least one previous time. The novelty reward is determined based on whether the test question selected by the test model from the test question library for the current time is a hot test question. The test question in the test question library is classified into the hot test question and a non-hot test question, and a quantity of historical selection times of the hot test question is greater than a quantity of historical selection times of the non-hot test question.

In a possible implementation, the test question library is divided into a candidate set and a meta-question set, the test question selected by the test model is a test question in the candidate set, the test question selected by the test model is further used to train the test model, and the meta-question set is used to calculate a reward in the plurality of dimensions.

The reinforcement learning includes a training phase and a test phase. The candidate set is used to train the test model in the training phase, and the meta-question set is used to calculate the reward in the plurality of dimensions in the test phase.

In a possible implementation, the reinforcement learning includes:

in the test phase, selecting the at least one test question from the candidate set via the test model, and after receiving a response of the user to the at least one test question, obtaining a capability evaluation value based on the response of the user to the at least one test question, where the capability evaluation value represents a degree of correctness of answering, by the user, a test question filtered for the user; and
in the verification phase, calculating a reward in the plurality of dimensions based on the capability evaluation value and the verification set, and updating the test model based on the reward in the plurality of dimensions, to obtain the test model obtained through current iterative learning.

In a possible implementation, the processing module is specifically configured to: perform supervised learning based on the test question library, to obtain the test model. The test question library includes label data labeled with the diversity and/or the novelty. The supervised learning includes performing supervised learning on an initial test model based on the label data, to obtain the trained test model.

In a possible implementation, the state encoder is specifically configured to obtain the difference between the input test questions and at least one capability evaluation value to generate the state code.

According to a third aspect, an embodiment of this application provides an online test apparatus. The online test apparatus may also be referred to as a digital processing chip or a chip. The chip includes a processing unit and a communication interface. The processing unit obtains program instructions through the communication interface, and when the program instructions are executed by the processing unit, the processing unit is configured to perform a processing-related function in any one of the first aspect or the optional implementations of the first aspect. Optionally, the online test apparatus may be a chip.

According to a fourth aspect, an embodiment of this application provides an online test apparatus. The online test apparatus may also be referred to as a digital processing chip or a chip. The chip includes a processing unit and a communication interface. The processing unit obtains program instructions through the communication interface, and when the program instructions are executed by the processing unit, the processing unit is configured to perform a processing-related function in any one of the first aspect or the optional implementations of the first aspect.

According to a fifth aspect, an embodiment of this application provides a computer-readable storage medium, including instructions. When the instructions are run on a computer, the computer is enabled to perform the method in any one of the first aspect or the optional implementations of the first aspect.

According to a sixth aspect, an embodiment of this application provides a computer program product including instructions. When the computer program product runs on a computer, the computer is enabled to perform the method in any one of the first aspect or the optional implementations of the first aspect.

## BRIEF DESCRIPTION OF DRAWINGS

FIG. 1 is a schematic flowchart of reinforcement learning according to an embodiment of this application;
FIG. 2 is a diagram of a system architecture according to this application;
FIG. 3 is a diagram of another system architecture according to this application;
FIG. 4 is a schematic flowchart of an online test method according to an embodiment of this application;
FIG. 5 is a schematic flowchart of another online test method according to an embodiment of this application;
FIG. 6 is a diagram of a relationship between knowledge points according to this application;

FIG. 7 is a schematic flowchart of another online test method according to an embodiment of this application;

FIG. 8 is a diagram of online test effect according to this application;

FIG. 9 is a diagram of other online test effect according to this application;

FIG. 10 is a diagram of a structure of an online test apparatus according to an embodiment of this application;

FIG. 11 is a diagram of a structure of another online test apparatus according to this application; and

FIG. 12 is a diagram of a structure of a chip according to this application.

## DESCRIPTION OF EMBODIMENTS

The following describes technical solutions in embodiments of this application with reference to accompanying drawings in embodiments of this application. The described embodiments are merely some but not all of embodiments of this application. All other embodiments obtained by a person of ordinary skill in the art based on embodiments of this application without creative efforts shall fall within the protection scope of this application.

An overall working procedure of an artificial intelligence system is first described. The following describes an artificial intelligence main framework from two dimensions: an "intelligent information chain" and an "IT value chain". The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" from an underlying infrastructure and information (providing and processing technology implementation) of artificial intelligence to an industrial ecology process of the system reflects value brought by artificial intelligence to the information technology industry.

(1) Infrastructure

The infrastructure provides computing capability support for an artificial intelligence system, implements communication with the external world, and implements support by using a basic platform. The infrastructure communicates with the outside via a sensor. A computing capability is provided by an intelligent chip, for example, a hardware acceleration chip like a central processing unit (central processing unit, CPU), a neural-network processing unit (neural-network processing unit, NPU), a graphics processing unit (English: graphics processing unit, GPU), an application-specific integrated circuit (application-specific integrated circuit, ASIC), or a field programmable gate array (field programmable gate array, FPGA). The basic platform includes related platforms, for example, a distributed computing framework and a network, for assurance and support, including cloud storage and computing, an interconnection network, and the like. For example, the sensor communicates with the outside to obtain data, and the data is provided to a smart chip in a distributed computing system provided by the basic platform for computing.

(2) Data

Data at an upper layer of an infrastructure indicates a data source in the field of artificial intelligence. The data relates to a graph, an image, a speech, and text, further relates to internet of things data of a conventional device, and includes service data of an existing system, and perception data such as force, displacement, a liquid level, a temperature, and humidity.

(3) Data processing

Data processing usually includes a manner such as data training, machine learning, deep learning, searching, inference, or decision-making.

Machine learning and deep learning may mean performing symbolic and formalized intelligent information modeling, extraction, preprocessing, training, and the like on data.

Inference is a process in which a human intelligent inference manner is simulated in a computer or an intelligent system, and machine thinking and problem resolving are performed based on formal information according to an inference control policy. A typical function is searching and matching.

Decision-making is a process in which a decision is made after intelligent information is inferred, and usually provides functions such as classification, ranking, and prediction.

(4) General capability

After data processing mentioned above is performed on data, some general capabilities may further be formed based on a data processing result. For example, the general capability may be an algorithm or a general system, for example, translation, text analysis, computer vision processing, speech recognition, and image recognition.

(5) Smart product and industry application

The smart product and industry application are a product and an application of an artificial intelligence system in various fields, and are package of overall artificial intelligence solutions, to productize and apply intelligent information decision-making. Application fields thereof mainly include a smart terminal, smart transportation, smart health care, autonomous driving, a smart city, and the like.

Embodiments of this application relate to related applications of neural networks and online testing. To better understand solutions in embodiments of this application, the following first describes related terms and concepts of the neural networks and online testing that may be used in embodiments of this application.

(1) Computerized adaptive testing (Computerized Adaptive Testing, CAT)

CAT is an online test that can accurately measure capabilities of students by continuously providing most appropriate test questions to students. CAT has been applied to many large-scale education and examination scenarios, for example, TOEFL and postgraduate entrance examinations. Basic logic of CAT is "to obtain most comprehensive capability evaluation of testees with a minimum quantity of questions". For example, for a testee whose capability level is low, a highly difficult question cannot help evaluate a capability level of the testee. Questions with corresponding difficulty can be provided based on the capability levels of the testees, to obtain more accurate tests. This avoids selecting questions that are greatly different from capabilities of the testees, avoids waste of question-making opportunities, and avoids "test-oriented rote practice".

(2) Self-attention (self-attention)

It means to effectively encode sequence data (for example, natural corpus "Your phone is very good") into several multi-dimensional vectors, to facilitate numerical operation. The multi-dimensional vectors converge information about a similarity between elements in the sequence, and the similarity is referred to as self-attention. A self-attention model may be understood as mapping from a query (query) to a series of key-value (key-value) pairs.

(3) Neural network

The neural network may include a neuron. The neuron may be an operation unit that uses xs and an intercept of 1 as an input. An output of the operation unit may be shown in Formula (1-1).

$$h_{W,b}(x) = f(W^T x) = f(\sum_{s=1}^{n} W_s x_s + b)$$

Herein, s=1, 2, ..., n, n is a natural number greater than 1, $W_s$ is a weight of $x_s$, and $b$ is a bias of the neuron. f is an activation function (activation function) of the neuron, and is used to introduce a nonlinear feature into the neural network, to convert an input signal in the neuron into an output signal. The output signal of the activation function may be used as an input of a next convolutional layer, and the activation function may be a sigmoid function. The neural network is a network formed by connecting a plurality of single neurons together. To be specific, an output of a neuron may be an input of another neuron. An input of each neuron may be connected to a local receptive field of a previous layer to extract a feature of the local receptive field. The local receptive field may be a region including several neurons.

(4) Feedforward neural network (feedforward neural network, FNN)

It is a type of artificial neural network. The feedforward neural network uses a unidirectional multi-layer structure. Each layer includes several neurons. In this neural network, each neuron may receive a signal from a neuron of a previous layer, and generate an output to a next layer. A $0^{th}$ layer is referred to as an input layer, a last layer is referred to as an output layer, and another intermediate layer is referred to as a hidden layer (or a hidden layer or a hidden layer). The hidden layer may be one layer, or may be a plurality of layers. For example, a deep neural network (Deep Neural Network, DNN) or a convolutional neural network (convolutional neuron network, CNN) may be an FNN-based neural network.

(5) Deep neural network (deep neural network, DNN), also referred to as a multi-layer neural network, may be understood as a neural network having a plurality of intermediate layers. The DNN is divided based on locations of different layers, so that a neural network in the DNN can be classified into three types: an input layer, an intermediate layer, and an output layer. Usually, a first layer is the input layer, a last layer is the output layer, and a middle layer is the intermediate layer or a hidden layer. Layers are fully connected to each other. To be specific, any neuron at an $i^{th}$ layer is necessarily connected to any neuron at an $(i+1)^{th}$ layer.

Although the DNN seems complex, each layer of the DNN may be represented as the following linear relationship expression: $\vec{y} = \alpha \, \alpha(w\, \vec{x} + \vec{b})$, where $\vec{x}$ is an input vector, $\vec{y}$ is an output vector, $\vec{b}$ is a bias vector or a bias parameter, w is a weight matrix (also referred to as a coefficient), and $\alpha()$ is an activation function. At each layer, only such a simple operation is performed on the input vector $\vec{x}$, to obtain the output vector $\vec{y}$. Because there are a plurality of layers in the DNN, there are also a plurality of coefficients W and a plurality of bias vectors $\vec{b}$. Definitions of these parameters in the DNN are as follows: The coefficient w is used as an example. It is assumed that in a three-layer DNN, a linear coefficient from a $4^{th}$ neuron at a second layer to a $2^{nd}$ neuron at a third layer is defined as $W_{24}^{3}$. The superscript 3 represents a layer at which the coefficient W is located, and the subscript corresponds to an output third-layer index 2 and an input second-layer index 4.

In conclusion, a coefficient from a $k^{th}$ neuron at an $(L-1)^{th}$ layer to a $j^{th}$ neuron at an $L^{th}$ layer is defined as $W_{jk}^{L}$.

It should be noted that there is no parameter W at the input layer. In the deep neural network, more intermediate layers make the network more capable of describing a complex case in the real world. Theoretically, a model with more parameters is more complex, and has a larger "capacity". It indicates that the model can complete a more complex learning task. Training of the deep neural network is a process of learning a weight matrix, and a final objective of the training is to obtain a weight matrix of all layers of a trained deep neural network (a weight matrix formed by vectors W at a plurality of layers).

(6) Convolutional neural network

The convolutional neural network (convolutional neuron network, CNN) is a deep neural network with a convolutional structure. The convolutional neural network includes a feature extractor that includes a convolutional layer and a sampling sublayer, and the feature extractor may be considered as a filter. The convolutional layer is a neuron layer that is in the convolutional neural network and at which convolution processing is performed on an input signal. At the convolutional layer of the convolutional neural network, one neuron may be connected only to some neurons at a neighboring layer. One convolutional layer usually includes a plurality of feature maps, and each feature map may include some neurons that are in a rectangular arrangement. Neurons in a same feature map share a weight, and the weight shared herein is a convolution kernel. Weight sharing may be understood as that an image information extraction manner is irrelevant to a location. The convolution kernel may be initialized in a form of a random-size matrix. In a process of training the convolutional neural network, the convolution kernel may obtain an appropriate weight through learning. In addition, benefits directly brought by weight sharing are that connections between layers of the convolutional neural network are reduced, and an overfitting risk is reduced.

One convolutional layer is used as an example. The convolutional layer may include a plurality of convolution operators. The convolution operator is also referred to as a kernel. During image processing, the convolution operator functions as a filter that extracts specific information from an input image matrix. The convolution operator may essentially be a weight matrix, and the weight matrix is usually predefined. In a process of performing a convolution operation on an image, the weight matrix is usually used to process pixels at a granularity of one pixel (or two pixels by two pixels, depending on a value of a stride (stride)) in a horizontal direction on the input image, to extract a specific feature from the image. A size of the weight matrix needs to be related to a size of the image. It should be noted that a depth dimension (depth dimension) of the weight matrix is the same as a depth dimension of the input image. During a convolution operation, the weight matrix extends to an entire depth of the input image. Therefore, a convolution output of a single depth dimension is generated by performing convolution with a single weight matrix. However, in most cases, a plurality of weight matrices with a same dimension rather than a single weight matrix are applied. Outputs of the weight matrices are stacked to form a depth dimension of a convolutional image. Different weight matrices may be used to extract different features of the image. For example, one weight matrix is used to extract edge information of the image, another weight matrix is used to extract a specific color of the image, still another weight matrix is used to blur an unnecessary noise in the image, and so on. Because the plurality of weight matrices have the same dimension, feature maps extracted by using the plurality of weight matrices with the same dimension also have a same dimension. Then, the plurality of extracted feature maps with the same dimension are combined to form an output of the convolution operation.

Weight values in these weight matrices need to be obtained through massive training in actual application. Each weight matrix including weight values obtained through training may be used to extract information from the input image, to help the CNN perform correct prediction.

When the CNN has a plurality of convolutional layers, a large quantity of general features are usually extracted at an initial convolutional layer. The general feature may also be referred to as a low-level feature. As a depth of the CNN increases, a feature extracted at a subsequent convolutional layer is more complex, for example, a high-level semantic feature. A feature with higher-level semantics is more applicable to a to-be-resolved problem.

(7) Graph convolutional network (Graph Convolutional Network, GCN)

The graph convolutional network is a deep learning model for modeling processing on non-Euclidean space data (for example, graph data). A principle of the graph convolutional network is to use pairwise message passing, so that a graph node iteratively updates a corresponding representation by exchanging information with a neighbor of the graph node.

The GCN is similar to a CNN. A difference lies in that an input of the CNN is usually two-dimensional structure data, while an input of the GCN is usually graph structure data. The GCN delicately designs a method for extracting features from graph data, so that these features can be used for node classification (node classification), graph classification (graph classification), and link prediction (link prediction) on the graph data, and a graph embedding (graph embedding) and the like may be further obtained.

(8) Graph attention network (Graph attention network, GAT)

The graph attention network is a new neural network architecture based on graph structure data. The graph attention network is a combination of a graph neural network and an attention layer. A hidden attention layer can be used to avoid shortcomings of previous methods based on graph convolution or its approximation. By stacking layers, a node can participate in a feature of a neighbor, and can (implicitly) specify different weights for different nodes in a neighborhood without any expensive matrix operations (such as inversion) and without learning of a structure of a graph in advance.

(9) Autoencoder

The autoencoder is a neural network that makes an output value equal to an input value according to a backpropagation algorithm; first compresses input data into a latent space representation; and then reconstructs an output based on this representation. The autoencoder usually includes an encoder (encoder) model and a decoder (decoder) model.

(10) Reinforcement learning

The reinforcement learning (reinforcement learning, RL), also referred to as re-encouragement learning, evaluation learning, or enhancement learning, is used to describe and resolve a problem of how an agent (agent) learns a policy to maximize return or achieve a specific objective in a process of interacting with an environment.

In the reinforcement learning, the agent (agent) learns in a "trial-and-error" manner, and a behavior of the agent is guided based on a reward (reward) obtained by interacting with the environment with an action (action). A goal is to enable the agent to obtain maximum rewards. The reinforcement learning does not need a training data set. In the reinforcement learning, a reinforcement signal (that is, a reward) provided by the environment evaluates a generated action rather than telling a reinforcement learning system how to generate a correct action. As the external environment provides little information, the agent needs to learn from its experience. In this way, the agent obtains knowledge from an action-evaluation (that is, a reward) environment and improves an action solution to adapt to the environment.

It may be understood that the reinforcement learning is a machine learning paradigm used to maximize return or complete a specific machine learning task according to a learning policy in the process in which the agent interacts with the environment. The agent learns in the trial-and-error manner, obtains the reward by interacting with the environment, and uses the reward to guide action selection. The agent finds an optimal policy in a current state, and selects a proper action according to the policy to maximize a benefit.

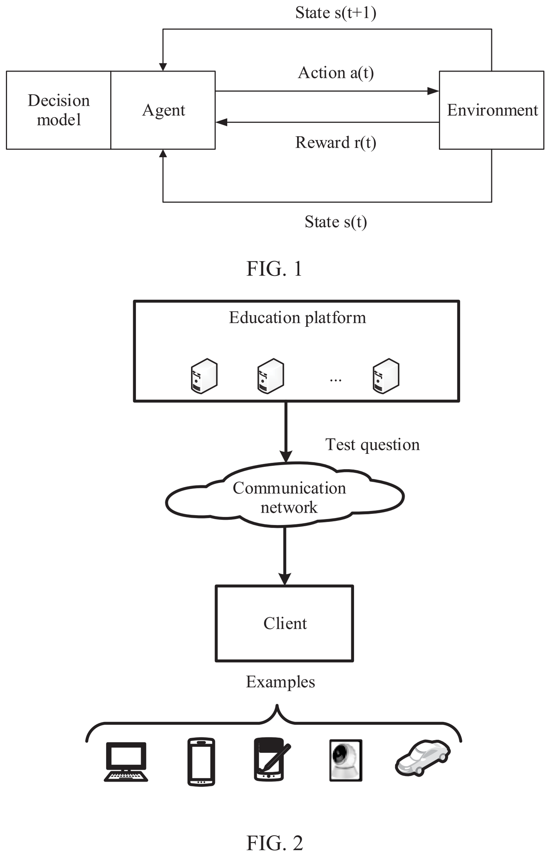

For example, FIG. 1 is a diagram of a training process of reinforcement learning. As shown in FIG. 1, the reinforcement learning mainly includes four elements: an agent (agent), an environment (environment), a state (state), an action (action), and a reward (reward). An input of the agent is referred to as a state, and an output of the agent is referred to as an action.

For example, the training process of the reinforcement learning is as follows: The agent interacts with the environment for a plurality of times to obtain a state, an action, and a reward of each interaction. The plurality of groups of (states, actions, and rewards) are used as training data to train the agent once. A next round of training is performed on the agent according to the foregoing process until a convergence condition is met.

A process of obtaining a state, an action, and a reward in one interaction is shown in FIG. 1. A current state $s(t)$ of the environment is input into the agent, to obtain an action a(t) output by the agent. A reward r(t), also referred to as return, in the interaction is calculated based on a related performance indicator of the environment under the action a(t). In this case, the state s(t), the action a(t), and the reward r(t) in the interaction are obtained. The state s(t), the action a(t), and the reward r(t) in the interaction are recorded for subsequent training of the agent. A next state s(t+1) of the environment under the action a(t) is further recorded to implement a next interaction between the agent and the environment.

(11) Loss function (loss function)

The loss function may also be referred to as a cost function (cost function), and is a measure for comparing a difference between a predicted output of a machine learning model for a sample and a real value (which may also be referred to as a supervised value) of the sample, that is, the loss function is used to measure the difference between the predicted output of the machine learning model for the sample and the real value of the sample. The loss function may generally include a mean square error loss function, a cross entropy loss function, a logarithm loss function, and an exponential loss function. For example, a mean square error may be used as a loss function, and is defined as

$$mse = \frac{1}{N}\sum_{n=1}^{N}(y_n - \hat{y}_n)^2$$. Specifically, a specific loss function may be selected based on an actual application scenario.

(12) Back propagation (back propagation, BP)

It is an algorithm for calculating a model parameter gradient based on a loss function and updating a model parameter. A neural network may correct a value of a parameter of an initial neural network model in a training process according to an error back propagation (back propagation, BP) algorithm, so that a reconstruction error loss of the neural network model becomes increasingly small. Specifically, an input signal is forward transferred until the error loss is generated in an output, and the parameter of the initial neural network model is updated through back propagation of information about the error loss, to converge the error loss. The back propagation algorithm is an error-loss-centered back propagation motion intended to obtain a parameter, such as a weight matrix, of an optimal neural network model.

(13) Gradient: The gradient is a derivative vector of a loss function about a parameter.

(14) Knowledge point: The knowledge point is a relatively independent minimum unit of knowledge, a theory, a principle, a thought, or the like. In this application, the knowledge point may be understood as an amount of unit information included in a test question. Each test question may include one or more knowledge points.

First, a system architecture provided in this application is described. A method provided in this application may be deployed in a terminal or a server (for example, deployed on a cloud platform or another remote server). When the method is deployed in the terminal, the method provided in this application may be directly deployed in the terminal, and the terminal may directly select an adapted test question from a test question library for a user. When the method is deployed in the server, for example, a cloud platform, as shown in FIG. 2, the method is deployed on an education platform, and a service is provided to a user via a client. For example, the education platform may select a test question for the user, and display the test question to the user via the client. During answering of the user, the education platform selects a next adapted test question for the user online based on an answering record of the user, so as to select the test question adapting to a capability of the user. This can more accurately mirror the capability of the user.

A client device of each user may interact with a server cluster via a communication network of any communication mechanism/communication standard. The communication network may be a wide area network, a local area network, a point-to-point connection, or any combination thereof. Specifically, the communication network may include a wireless network, a wired network, a combination of a wireless network and a wired network, or the like. The wireless network includes but is not limited to any one or more of a 5th-generation (5th-generation, 5G) mobile communication technology system, a long term evolution (long term evolution, LTE) system, a global system for mobile communications (global system for mobile communications, GSM), a code division multiple access (code division multiple access, CDMA) network, a wideband code division multiple access (wideband code division multiple access, WCDMA) network, wireless fidelity (wireless fidelity, Wi-Fi), Bluetooth (Bluetooth), ZigBee (ZigBee), a radio frequency identification (radio frequency identification, RFID) technology, long range (Long Range, Lora) wireless communication, and near field communication (near field communication, NFC). The wired network may include an optical fiber communication network, a network including coaxial cables, or the like.

The terminal may specifically include but is not limited to a personal computer, a computer workstation, a smartphone, a tablet computer, a smart camera, a smart car, another type of cellular phone, a media consumption device, a wearable device, a set-top box, and a game console.

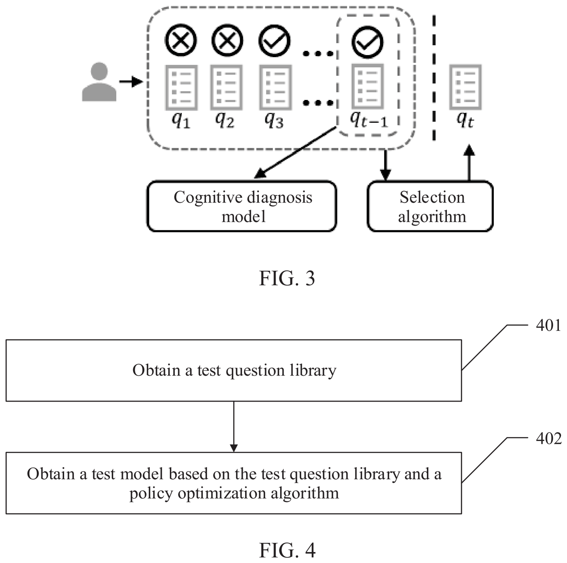

Usually, CAT includes a plurality of parts. For example, a CAT scenario may be shown in FIG. 3, and may specifically include a cognitive diagnosis model (Cognitive Diagnosis Model, CDM) and a selection algorithm.

The CDM captures capabilities of students based on their answers to test questions. Usually, a simple CDM is an item response theory (Item Response Theory), and approximates actual capabilities of the students based on an item response function. A deep learning- based CDM like a Neural CDM (NCD) simulates interaction between students and test questions via a neural network.

The selection algorithm selects, based on a historical answering record of a student, a test question most suitable for the student. There are two mainstream CAT question-making policies in the industry:

Heuristic rule-based question-making algorithm: calculates an information amount of each test question according to an information entropy theory, and determines a question-making sequence through sorting. Typical models include maximum information entropy-based MFI, kullback-leibler information-based KLI, a question-making policy with a largest expected model change (Quality meets diversity: A model-agnostic framework for computerized adaptive testing, MAAT), and the like.

Parameterized training learning question-making policy: is optimized based on a neural network architecture by using technologies such as meta-learning and reinforcement learning. Typical models include meta-learning-based BOBCAT, reinforcement learning-based NCAT, and the like.

A traditional static selection algorithm usually selects a test question with a largest information amount (MFI) or a test question with a largest expected model change (MAAT). These algorithms are usually greedy about a specific step, but lack a long-term vision. In recent years, data-driven selection algorithms have emerged, and can perform centralized learning from large-scale datasets.

As a question selector, the selection algorithm plays an important role in a CAT process in FIG. 3. A common selection algorithm is to select a test question based on maximum fisher information (max fisher information, MFI), or select a test question by calculating an integral within a capability interval by using a K-L information (Kullback-Leibler Information, KLI) method. These heuristic algorithms can be used only for specific CDMs, such as IRT. To improve this defect, a CDM-independent algorithm MAAT is proposed. It selects, according to rules of active learning, a test question that maximizes a CDM change. In addition, RAT benefits the selection algorithm by capturing capabilities of students in multiple aspects. In recent years, many scholars have proposed data-driven selection algorithms from a perspective of meta-learning (meta learning) or reinforcement learning (Reinforcement Learning). For example, a bilevel optimization-based computerized adaptive testing (Bilevel Optimization-Based Computerized Adaptive Testing, BOBCAT) method is a meta-learning-based method that combines the CDM and the selection algorithm into a bilevel optimization framework. A neural network-based computerized adaptive testing (Fully Adaptive Framework: Neural Computerized Adaptive Testing for Online Education, NCAT) method is a reinforcement learning-based method that selects a test question via an attention mechanism-based deep Q-network (Deep Q-network, DQN).

For example, MAAT is an active learning-based algorithm that is not limited to a specific CDM in design. The selection algorithm of MAAT includes three parts: a quality module, a diversity module, and an importance module. The quality module is configured to rank questions based on an information amount (maximum information entropy). The diversity module is configured to weight different knowledge points, where a larger quantity of times a knowledge point is selected indicates that the knowledge point is more important. If a question is more similar to other questions, the question is more representative. However, a selection policy of the MAAT algorithm is greedy, and focuses only on importance of a current solution. As a result, an obtained solution is not optimal and may fall into a suboptimal solution. In addition, the selection policy of the MAAT algorithm is fixed, and a generalization capability is weak.

For another example, BOBCAT is a meta-learning-based method that introduces an MAML framework and achieves a mode of training a CDM and a selection policy as a whole through cyclic alternate training in an inner loop and an outer loop. The CDM is trained in the inner loop, and the selection policy is trained in the outer loop. BOBCAT establishes a parameter relationship between the CDM and the CAT for the first time, so that training can be performed as a whole. However, BOBCAT focuses only on a quality objective. As a result, a selected test question may lack diversity and novelty, and cannot comprehensively mirror a capability of a testee. In addition, effective information about the test question and a knowledge point is not fully explored. As a result, an optimal solution may not be selected.

For another example, NCAT is a reinforcement learning-based method that proposes a learnable neural computer adaptive testing framework. The framework formally defines CAT as a reinforcement learning problem and directly learns a selection algorithm from actual data. Specifically, NCAT reshapes the selection algorithm into a bilevel optimization objective, and converts a loss value in a bilevel optimization problem into a maximum expected cumulative reward in reinforcement learning. In terms of model structure, NCAT captures complex performance information of a student via a dual-channel performance learning (PL) component, and identifies and extracts a contradiction in a student score via a contradiction learning (CL) component, to mitigate impact of interference. Finally, NCAT performs next-step selection at a policy layer, and performs optimization by using a Q-learning method. However, similar to BOBCAT, NCAT also focuses only on a quality objective. As a result, a selected test question may lack diversity and novelty, and cannot comprehensively mirror a capability of a testee. In addition, effective information about the test question and a knowledge point is not fully explored. As a result, an optimal solution may not be selected.

Therefore, this application provides an online test method. Online learning is performed on a selection algorithm for a test question through reinforcement learning, and the selection algorithm is updated from a plurality of dimensions, so that a test question with higher quality, novelty, and diversity can be selected.

In the method provided in this application, after a test question library including a plurality of test questions is obtained, a test model may be obtained based on the test question library and a policy optimization algorithm, for example, reinforcement learning or supervised learning. The test model may be used to select at least one test question from the test question library in an online test process. The test model includes a state encoder and a recommender. The state encoder is configured to obtain a difference between input test questions to generate a state code. The recommender is configured to output a test question based on the state code and an optimization objective. The optimization objective includes one of novelty or diversity. A factor for measuring the novelty may include an exposure rate, and a factor for measuring the diversity includes whether there is an added knowledge point.

The optimization objective of the policy optimization algorithm includes a reward function used to update the test model. The test model is updated based on the reward function, so that an output result of the test model better meets guidance or a constraint of the reward function in the process of updating the test model.

Specifically, a reward function in a plurality of dimensions may be set in the optimization objective. The reward function in the plurality of dimensions is used to update the test model, so that when selecting a test question for a user, the test model can select the test question for the user from the plurality of dimensions, so that the selected test question can more accurately mirror a capability of the user.

When the test model is obtained based on the policy optimization algorithm, reinforcement learning, supervised learning, or the like may be specifically performed. For example, an expert may label label data with diversity or novelty, and then perform supervised learning based on a state code input, so that the test model can output a test question that meets diversity or novelty. Alternatively, the test model may be obtained based on at least one of novelty or diversity as an optimization objective, so that a test question with novelty or diversity is output through reinforcement learning.

That is, in a possible implementation, supervised learning may be performed based on the test question library, to obtain the test model. The test question library includes the label data labeled with the diversity and/or the novelty. The supervised learning includes performing supervised learning on an initial test model based on the label data, to obtain the trained test model. In this implementation of this application, in addition to the reinforcement learning, the supervised learning may also be performed, to obtain the test model, so that the test model has stronger generalization. In addition, training is performed based on the label data labeled with the diversity and/or the novelty, so that a result that the user expects to output can be obtained. This improves novelty and/or diversity of the output result of the test model.

It should be noted that in the following implementations of this application, an example in which the policy optimization algorithm is a reinforcement learning algorithm is used for description. The reinforcement learning process mentioned below may be replaced with supervised learning or another learning process in which at least one of the novelty or the diversity is used as the optimization objective. This is not limited in this application.

FIG. 4 is a schematic flowchart of an online test method according to an embodiment of this application. Details are as follows.

401: Obtain a test question library.

The test question library may include a plurality of test questions set for a user. Each test question may include one or more knowledge points. Usually, the test question may be a preset test question, a test question generated based on a preset knowledge point, a test question collected from big data, or the like. In addition, test question libraries corresponding to all users may be the same or different.

It should be noted that the user mentioned in this application may also be referred to as a subject, a student, a testee, or another role participating in a test.

For example, in a grammar test in a language, the test question library may include multiple types of test questions, for example, may include a plurality of single-choice questions, a plurality of multiple-choice questions, or translation test questions, that include grammar knowledge points.

For another example, in a mathematical test, the test question library may include an addition test question, a subtraction test question, a multiplication test question, a division test question, or a test question with a combination of a plurality of algorithms.

The test question library may include different data for different scenarios. For example, in offline training, answering records obtained after one or more users answer a question may be collected. In this case, the test question library may further include the answering records of the one or more users for the test question. For example, in an online test scenario, after test questions are selected for the user and are displayed to the user, answering data of the user may be received, to obtain an answering record of each test question.

402: Obtain a test model based on the test question library and a policy optimization algorithm.

The test model may be used to output a selected test question. The test model may specifically include a state encoder and a recommender. The state encoder is configured to obtain a difference between input test questions to generate a state code. The recommender may be configured to output the test question based on the state code and an optimization objective. The optimization objective includes at least one of novelty or diversity. A factor for measuring the novelty includes an exposure rate, and a factor for measuring the diversity includes whether there is an added knowledge point.

The policy optimization algorithm may learn based on at least two of quality, novelty, and/or diversity as an optimization objective. The novelty indicates controlling an exposure rate of a test question, and the diversity indicates covering a plurality of knowledge points, to obtain a test model that can output a test question with novelty or diversity.

For example, in this embodiment of this application, reinforcement learning is used as an example. In a reinforcement learning process, one or more test questions selected for the user may be first selected from the test question library. After answering feedback of the user is received, further learning may be performed based on an answering status of the user, to select, based on an updated test model, a test question that adapts to a capability of the user. Alternatively, the reinforcement learning may be performed based on a historical answering record of the user.

In the reinforcement learning process, referring to the reinforcement learning procedure shown in FIG. 1, answering of the user may be understood as interaction between an agent and an environment, and the test model may be understood as a decision model. The test model may include the state encoder and the recommender. The state encoder may be configured to obtain the difference between the input test questions to obtain the state code. The recommender is configured to output, based on the state code, the test question selected for the user. One or more groups of training data (states, actions, and rewards) may be obtained through answering of the user, and learning is performed based on the obtained one or more groups of training data, to update the test model. When a reward is calculated, the reward may be calculated from a plurality of dimensions, to update the test model from the plurality of dimensions, so that the test model can select a test question for the user from the plurality of dimensions, and the selected test question can more comprehensively mirror a capability of the user, thereby improving test effect.

Specifically, the state encoder may generate the state code based on the difference between the test questions and a capability evaluation value of the user and based on at least two of the quality, the novelty, or the diversity as the optimization objective. The capability evaluation value of the user may be specifically determined based on the answering status of the user for the test question. The novelty includes an objective related to an exposure rate of a test question, and the diversity includes an objective related to whether an output test question includes an added knowledge point.

Specifically, an optimization objective of the policy optimization algorithm also correspondingly includes a reward function in the plurality of dimensions, and may specifically include a function corresponding to at least one of a quality reward, a diversity reward, or a novelty reward. The quality reward is determined based on output accuracy of testing of the test model in the test question library. The diversity reward is determined based on whether a new knowledge point is added to a test question selected by the test model from the test question library for a current time relative to a test question selected by the test model from the test question library for at least one previous time. The novelty reward is determined based on whether the test question selected by the test model from the test question library for the current time is a hot test question. The test question in the test question library is classified into the hot test question and a non-hot test question, and a quantity of historical selection times of the hot test question is greater than a quantity of historical selection times of the non-hot test question.

Therefore, in this implementation, the test model may be updated through rewarding from a dimension like the quality, the diversity, or the novelty, so that the test model can select a test question for the user from the dimension like the quality, the diversity, or the novelty, thereby more comprehensively and accurately mirroring the capability of the user.

The reinforcement learning in this embodiment may be divided into a plurality of phases, for example, may be divided into a test phase and a verification phase. Correspondingly, the test question library may be divided into a candidate set and a meta-question set. The test question selected by the test model for the user is selected from the candidate set. A test question in the meta-question set may be used to calculate a value of the reward function in the verification phase. In other words, when the reward function in the plurality of dimensions is calculated, the reward function is calculated based on the test question in the meta-question set.

Specifically, in the test phase, at least one test question may be selected by the test model from the candidate set, and after a response of the user to the at least one test question is received, a corresponding capability evaluation value of the user may be correspondingly calculated based on the at least one test question, where the capability evaluation value may represent a degree of correctness of answering, by the user, the test question selected for the user.

In the verification phase, a reward in the plurality of dimensions may be calculated based on the capability evaluation value of the user and a verification set, and the test model is updated based on the reward in the plurality of dimensions, to obtain the test model obtained through current iterative learning.

In addition, the test model in this embodiment may further include a relationship-aware aggregator, and an input of the relationship-aware aggregator may include a prerequisite graph, a correlation graph, or the like. The relationship-aware aggregator may be configured to: extract an association relationship between knowledge points or an association relationship between a test question and a knowledge point from the input prerequisite graph or correlation graph, and convert the association relationship into an embedding representation via an embedding layer. The state encoder may extract the association relationship between the test question and the knowledge point based on the embedding representation output by the relationship-aware aggregator, and generate the state code based on the association relationship.

The prerequisite graph represents an execution sequential relationship between knowledge points in the input test question. For example, if a prerequisite relationship relates to a pair of knowledge points, it means that one knowledge point needs to be learned logically before the other knowledge point. For example, multiplication is a successor of addition. The correlation graph represents a correlation relationship between the test question and the knowledge point, for example, represents knowledge points included in a test question.

Therefore, in this implementation of this application, the association relationship between the test question and the knowledge point or the association relationship between the knowledge points may be represented by a graph structure. In this application, the relationship-aware aggregator is disposed for the graph structure, to explore the association relationship between the test question and the knowledge point or the association relationship between the knowledge points. This improves performance of a subsequently selected test question in each dimension, thereby improving a probability of obtaining an optimal solution.

The foregoing describes the method procedure provided in this application. For ease of understanding, the method provided in this application is described in more detail below based on a specific application scenario.

First, the method provided in this application may be understood as a graph-enhanced multi-objective method for CAT (Graph-enhanced Multi-Objective method for CAT, GMOCAT). To be specific, a CAT process is represented as a multi-objective Markov decision process (MOMDP), and then a scalarized multi-objective reinforcement learning (Scalarized Multi-Objective Reinforcement Learning, MORL) framework is introduced. Compared with a greedy algorithm, an RL framework has been proven to explore, from a long-term perspective, a test question that is more suitable for a testee.

In this implementation of this application, a plurality of objectives are set in the RL framework, for example:
Quality objective: accurately predicts a capability of a student.

Diversity objective: diversifies knowledge concepts when recommending a test question, to more comprehensively mirror a capability of a student.

Novelty objective: controls an exposure rate of a test question and avoids selecting a test question with a high exposure rate.

For the foregoing plurality of objectives, in this application, a plurality of rewards are set in the RL framework, for example, a quality reward, a diversity reward, or a novelty reward.

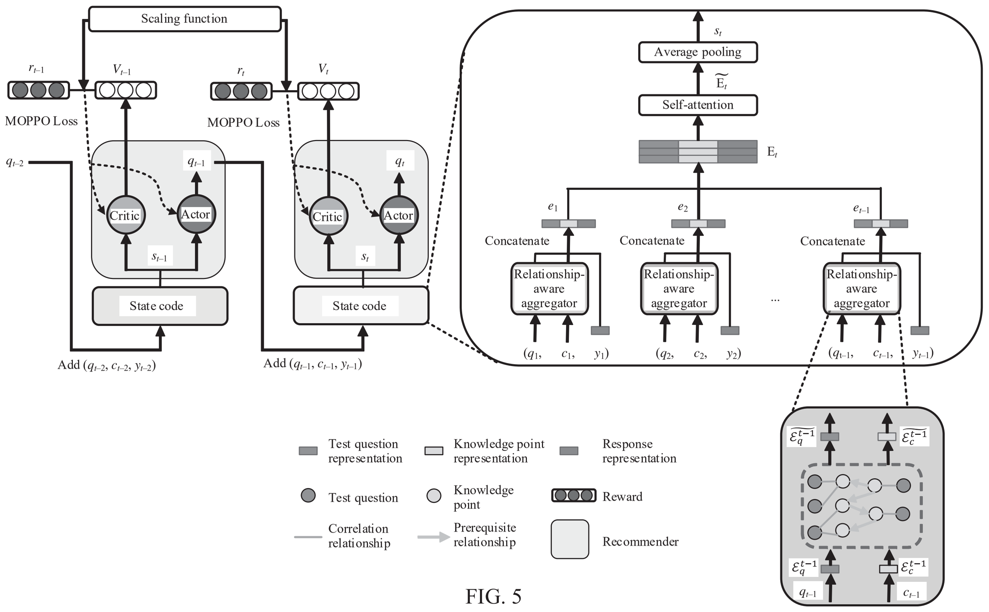

Refer to FIG. 5. The method procedure provided in this application is described from a plurality of perspectives. For example, the plurality of perspectives may be classified into a multi-objective reward, a relationship-aware aggregator, a state encoder, and an actor-critic recommender. The actor-critic recommender may also be referred to as a recommender. The following separately provides descriptions.

I. Multi-objective reward

1. Quality reward

Generally, an effective selection algorithm can select a test question that is most suitable for a student, to accurately predict a capability of the student. For any student, because an actual capability of the student is unknown, a meta-question set (meta question set) of the student may be used to measure an error of capability evaluation. Specifically, in a test step t, prediction accuracy of $\theta_t$ on the meta-question set needs to be calculated, and is denoted as $ACC(\theta_t)$. A larger value of $ACC(\theta_t)$ indicates that a capability evaluation value is more accurate and closer to the actual capability. It can be understood that if a test question selected by the selection algorithm helps improve accuracy of capability evaluation, a reward needs to be given. In contrast, if the selected test question reduces the accuracy, a penalty needs to be given. Therefore, the quality reward may be represented as:

$$r_{qua} = ACC(\theta_t) - ACC(\theta_{t-1})$$

A test question in the meta-question set is usually used to calculate the quality reward and is not selected for the student.

2. Diversity reward

In a large-scale comprehensive exam, a test question needs to contain abundant knowledge points. A diversity objective requires covering multiple knowledge points. Therefore, if a selection algorithm selects a question with a new knowledge point, a positive reward needs to be given. A reward value can be discretized, to simplify the algorithm. If a test question relating to a new knowledge point is selected, the diversity reward is 1. Otherwise, the diversity reward is 0.

$$r_{div} = \begin{cases} 1, & \text{if} \quad c_t \setminus \{c_1 \cup c_2 \ldots \cup c_{t-1}\} \neq \emptyset \\ 0, & \text{otherwise} \end{cases}$$

Herein, $c_t$ is a knowledge point contained in $g_t$.

3. Novelty reward

Generally, a lack of novelty leads to excessive exposure of a test question. This may affect a behavior of a student during an exam. Therefore, a selection algorithm needs to consider novelty, and the novelty reward is used to control exposure of the test question. It is assumed that $\mathcal{T}$ represents a preset set of hot test questions. Non-hot test questions may be encouraged to be selected because they are more likely to be novel in the future, to maintain balanced distribution of exposure of the test questions. Therefore, if a selected test question is not in $\mathcal{T}$, the novelty reward is 1, and otherwise, the novelty reward is 0, for example, represented as follows:

$$r_{nov} = \begin{cases} 1, & \text{if } q_t \notin \mathcal{T} \\ 0, & \text{otherwise} \end{cases}$$

Generally, T is predetermined, and does not change in a CAT process. Certainly, $\mathcal{T}$ may also be updated based on a quantity of selection times of each test question as a quantity of test times increases.

II. Relationship-aware aggregator

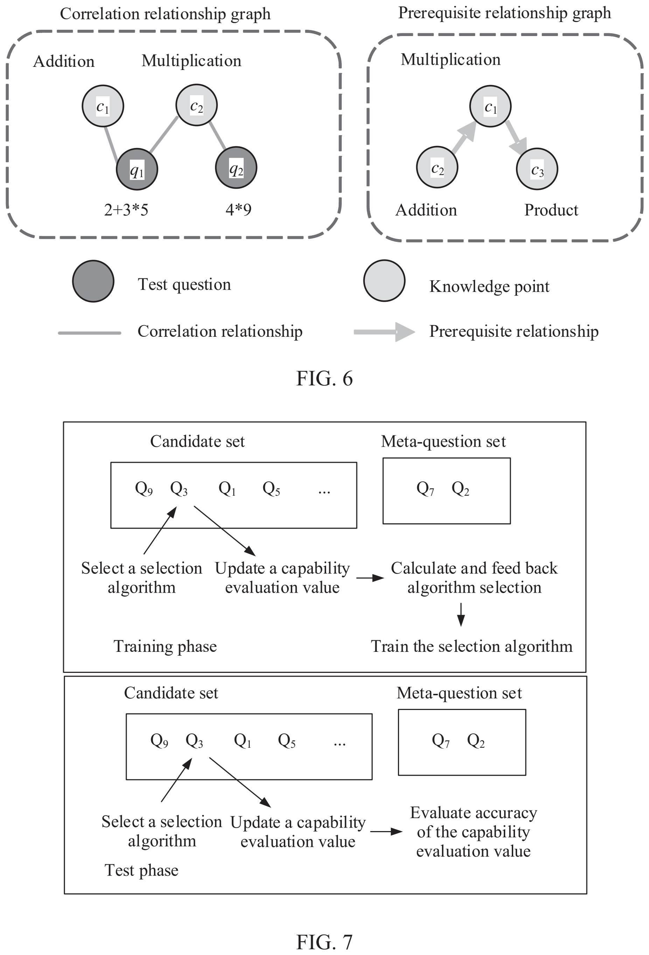

Because a knowledge point appears in both a prerequisite graph (representing a sequential relationship between knowledge points) and a correlation graph (representing a correlation relationship between knowledge points), as shown in FIG. 6, an embedding of the knowledge point is affected by the two relationships. A GAT is applied to aggregate relationship information represented in the prerequisite graph or the correlation graph. For example, for a knowledge point c, an original embedding corresponding to the knowledge point c is $\varepsilon_c$, and $N_c^{pre}$ and $N_c^{cor}$ are set to neighborhoods of the knowledge point c in the prerequisite graph and the correlation graph. Neighbor embeddings with attention weights are aggregated together to obtain a prerequisite relationship-aware embedding $g_{pre}$ and a correlation relationship-aware embedding $g_{cor}$:

$$g_{pre} = \sum_{c' \in N_c^{pre}} \alpha_{c,c'} W_{pre} \varepsilon_{c'}, \quad g_{cor} = \sum_{q' \in N_c^{cor}} \beta_{c,q'} W_{cor} \varepsilon_{q'}$$

Herein,

$$\alpha_{c,c'} = \text{Softmax}_{c'} \left( \text{att}_{pre} \left( [W_{pre} \varepsilon_c, W_{pre} \varepsilon_{c'}] \right) \right), c' \in N_c^{pre}$$

$$\beta_{c,q'} = \text{Softmax}_{q'} \left( \text{att}_{cor} \left( [W_{cor} \varepsilon_c, W_{cor} \varepsilon_{q'}] \right) \right), q' \in N_c^{cor}$$

att. represents a linear layer with a LeakyReLU activation function. [·] is a concatenation operation, and $W_{pre}$ and $W_{cor}$ are trainable parameters.
$g_{pre}$ and $g_{cor}$ include different relationship information. The following processing method is used, to distinguish their importance. A weight $\mu_{pre}$ of a prerequisite relationship is calculated based on a similarity between an attention vector P and $g_{pre}$. For example, a formula may be represented as:

$$\mu_{pre} = P^T \cdot tanh(W \cdot g_{pre} + b)$$

A weight $\mu_{cor}$ of a correlation relationship may also be obtained similarly. A softmax operation is performed on the two weights. Finally, a relationship-aware embedding $\widetilde{\mathcal{E}}_c$ of the knowledge point c is obtained according to the following formula:

$$\widetilde{\mathcal{E}}_c = \mu_{pre}\mathfrak{g}_{pre} + \mu_{cor}\mathfrak{g}_{cor}$$

Test question relationship aggregation: Relationships between test questions are aggregated again via the GAT. For a test question q, an original embedding of the test question is $\varepsilon_q$, and $N_q^{cor}$ is set to a set of neighbors of the test question in the correlation graph. Because the test question includes only a correlation relationship, a relationship-aware embedding $\widetilde{\mathcal{E}}_q$ of the test question is calculated according to the following formula:

$$\mathbf{h}_{cor} = \sum_{c' \in N_q^{cor}} \xi_{q,c'} \mathbf{W}_{cor}\mathcal{E}_{c'}, \quad \widetilde{\mathcal{E}}_q = \mathbf{h}_{cor}$$

III. State encoder

The state encoder $f_{se}$ generates a status based on a historical response record as an input:

$$s_t^i = f_{se}\left(\{(q_1^i, c_1^i, y_1^i), \dots, (q_{t-1}^i, c_{t-1}^i, y_{t-1}^i)\}\right)$$

First, each question q () is mapped to a real-valued embedding $\varepsilon_q$, via a matrix $W_q$, and a dimension of an embedding vector is d. An embedding vector $\varepsilon_c$ of a knowledge point c and an embedding vector $\varepsilon_y$ of a response y are obtained through a same operation.

In addition, relationship information may be extracted via a relationship-aware aggregator, an original test question and a knowledge point embedding representation are used as an input of the relationship-aware aggregator, and relationship-aware embeddings $\widetilde{\mathcal{E}}_q$ and $\widetilde{\mathcal{E}}_c$ of the test question and a knowledge point are obtained.

After $\widetilde{\mathcal{E}}_q$, $\widetilde{\mathcal{E}}_c$, and $\varepsilon_y$ are obtained, the state encoder concatenates embeddings corresponding to triplets at all historical time steps together, for example, represented as follows:

$$\mathbf{e}_{t'} = \widetilde{\mathcal{E}}_q^{t'} \oplus \widetilde{\mathcal{E}}_c^{t'} \oplus \mathcal{E}_y^{t'}$$

Correspondingly, the historical response record (which may also be referred to as an answering record or a learning record of a user) $\{(q\_\{t'\}, c\_\{t'\}, y\_\{t'\}|t' \in [1, t - 1]\}$ may be represented as a matrix:

$$E_t = [e_1, e_2, \dots, e_{t-1}]^T$$

Different historical response records usually include different information. For example, correctly answering a difficult question includes more information than correctly answering a simple question. To capture a difference between response records, a self-attention mechanism is applied to $E_t$, for example, represented as follows:

$$\widetilde{\mathbf{E}}_t = \text{Softmax}\left(\frac{(\mathbf{E}_t \mathbf{W}^Q)(\mathbf{E}_t \mathbf{W}^K)^T}{\sqrt{d_k}}\right)(\mathbf{E}_t \mathbf{W}^V)$$

Herein, $W^Q$, $W^K$, and $W^V$ are trainable parameters, and $\sqrt{d_k}$ is a scaling factor. In addition, a LayerNorm layer and a skip-connection layer may also be added after a self-attention layer, so that overfitting is avoided according to a dropout mechanism.

Because an actual capability of a student is fixed or fluctuates within a small range in a CAT process, a sequence of all records is not important. Therefore, an average pooling operation is performed on $\widetilde{E_t}$, to generate a state code $s_t$.

IV. Actor-critic recommender

The actor-critic recommender can select a next test question based on the state code. The actor-critic recommender can be understood as including an actor and a critic. The actor is a fully connected layer with a parameter $\phi_\pi$, and is used to sample an action from distribution $\pi(q_t|s_t; \phi_\pi)$. The critic is a fully connected layer with a parameter $\phi_V$ A state is given, and the critic generates an output:

$$V(s_t; \phi_v) = \left[V(s_t)_{qua}, V(s_t)_{div}, V(s_t)_{nov}\right]$$

The output may be understood as a vector for predicting expected benefits, where each element separately corresponds to a quality objective, a diversity objective, and a novelty objective.

A weighted sum of benefits $\mathcal{J}$ is maximized based on a proximal policy optimization (Proximal Policy Optimization, PPO) algorithm in a multi-objective form (which may also be replaced with another reinforcement learning algorithm like DQN or DDPG). Specifically, an advantage value $A(s_t, q_t)$ of selected $q_t$ is defined as an actual benefit value of a state-action pair minus an expected return value in this state:

$$\mathbf{A}(\mathbf{s}_t, q_t) = \sum_{t'=t} \gamma^{t'-t} \mathbf{r}(\mathbf{s}_{t'}, q_{t'}) - \mathbf{V}(\mathbf{s}_t)$$

A vectorized advantage value is converted into a scalar based on a scalarization function w, and an actor parameter is updated based on a clipped surrogate loss. A loss function can be defined as follows:

$$\mathcal{L}_1 = -\mathbb{E}_{\tau \sim \pi_{old}}\left[\text{Min}\left\{\frac{\pi(q_t|\mathbf{s}_t)}{\pi_{old}(q_t|\mathbf{s}_t)}\mathbf{w}^T\mathbf{A}(\mathbf{s}_t, q_t),\right.\right.$$

$$\left.\left.\text{Clip}\left(\frac{\pi(q_t|\mathbf{s}_t)}{\pi_{old}(q_t|\mathbf{s}_t)}, 1-\epsilon, 1+\epsilon\right)\mathbf{w}^T\mathbf{A}(\mathbf{s}_t, q_t)\right\}\right]$$

Herein, clip is used to limit an update amplitude. A loss function of the critic is based on an objective that the expected benefit is as close as possible to the actual benefit. The loss function may be defined as follows:

$$\mathcal{L}_2 = \frac{1}{2}\mathbf{w}^T\|\mathbf{V}(\mathbf{s}_t) - \sum_{t'=t} \gamma^{t'-t}\mathbf{r}(\mathbf{s}_{t'}, q_{t'})\|^2$$

Then, a loss of multi-objective PPO (MOPPO) is a weighted sum of the two losses, and a hyperparameter $\alpha$ is used:

$$\mathcal{L} = \mathcal{L}_1 + \alpha\mathcal{L}_2$$

Reverse updating is performed based on a final loss value, to update the actor-critic recommender, the state encoder, the relationship-aware aggregator, and the like.

In the reinforcement learning process in this implementation of this application, a CAT task may be modeled as a continuous decision problem, and the continuous decision problem is formalized as a multi-objective Markov decision process (MOMDP). The MOMDP may be defined by a tuple $< \mathcal{S}, \mathcal{A}, \mathcal{P}, R, \gamma >$.

S represents a state set. During testing, a state is defined as $s_t^i = f_{se}\left(\{(q_1^i, c_1^i, y_1^i), ..., (q_{t-1}^i, c_{t-1}^i, y_{t-1}^i)\}\right)$, where $f_{se}$ represents the state encoder, a historical response record of a student i is used as an input, and the state $s_t^i$ is output.

is a finite action set, and may be understood as a candidate set. During testing, the selection algorithm selects a test question from the action set (namely, the candidate set).

$P$ represents a transition probability $\mathcal{P}\left(s_{t+1}^i \middle| s_t^i, q_t^i\right)$ of reaching a next state $s_{t+1}^i$ after a question $q_t^i$ is selected in the state $s_t^i$.

R : $\mathcal{S} \times \mathcal{A} \mapsto R^m$ represents an instant reward function for $q_t^i$ selected by the selection algorithm in the state $s_t^i$. The reward function is vectorized, that is, $r\left(s_t^i, q_t^i\right) = [r_{qua}, r_{div}, r_{nov}]$, and separately represents the quality reward, the diversity reward, and the novelty reward.

$\gamma \in [0,1]$ is a discount factor for balancing an instant reward and a future reward.

Therefore, in this application, the CAT process is reconstructed from a perspective of MORL. It is assumed that n represents a quantity of students. For the student i, in a test step t, the selection algorithm $\pi$ selects a question from a candidate question set of the student i based on the state, that is, $\pi\left(q_t^i \middle| s_t^i\right)$. Then, the test question is pushed to the student i, and a multi-objective reward $r\left(s_t^i, q_t^i\right)$ ) is obtained. Finally, a weighted sum of benefits $\mathcal{J}$ is expected to be maximized:

$$\max_{\pi} \mathcal{J} = \max_{\pi} \frac{1}{n} \sum_{i=1}^{n} \left[ \mathbf{w}^T \left( \sum_{t'=1}^{T} \gamma^{t'} \mathbf{r}\left(\mathbf{s}_{t'}^i, q_{t'}^i\right) \right) \right] \qquad (1)$$

$$= \max_{\pi} \mathbb{E}_{i \sim \pi} \left[ \mathbf{w}^T \left( \sum_{t'=1}^{T} \gamma^{t'} \mathbf{r}\left(\mathbf{s}_{t'}^i, q_{t'}^i\right) \right) \right] \qquad (2)$$

Herein, w is the scalarization function, and may be considered as a weight vector, and an element of the weight vector represents importance of each objective.

For example, as shown in FIG. 7, a CAT process in which a data-driven selection algorithm is used includes two phases: a training phase and a test phase. To train/test the selection algorithm, a sample including an interaction records of the student i needs to be segmented into a candidate question set $\mathcal{D}_c^i$ and a meta-question set $\mathcal{D}_m^i$, as shown in FIG. 7. The candidate question set and the meta-question set are randomly selected, and are different for all students. In this embodiment of this application, the training/test phase of the CAT process is defined as follows:

Training phase: For each student i in the training set,

(1) in the test step t, the selection algorithm selects a test question from a candidate question set based on a historical response record of the student i;

(2) the student makes a response, and a CDM updates current evaluation $\theta_t^i$ on the capability of the student;

(3) reward feedback is calculated based on $\theta_t^i$ and the meta-question set, to measure precision of a capability evaluation value; and

(4) after T iterations of the foregoing process, the selection algorithm may be trained to maximize the feedback.

Test phase: For a new student j in a test set, a phase (1) and a phase (2) are the same as those in the training phase. A phase (3) is to evaluate a plurality of performance indicators based on $\theta_t^j$ and the meta-question set. In the test phase, only output effect is verified, and the selection algorithm may not be trained.

The foregoing describes the method procedure provided in this application. Effect achieved by the method provided in this application is described below based on a specific application scenario.

Three education datasets (Dataset) are used as examples: Eedi, ASSIST, and Junyi. A student with fewer than 40 interaction records is deleted. Table 1 shows statistical information in processed datasets.

Table 1

| Dataset | Eedi | ASSIST | Junyi |
|---|---|---|---|
| Quantity of students | 4918 | 1360 | 20395 |
| Test question | 948 | 17751 | 2835 |
| Knowledge point | 86 | 123 | 40 |
| Answering record | 1382727 | 239919 | 2537898 |
| Prerequisites | 334 | 1166 | 306 |
| Knowledge point of each test question | 4.0 | 1.2 | 1.0 |
| Positive label probability | 0.55 | 0.62 | 0.69 |

80% of the students, 10% of the students, and 10% of the students are used as a training set, a verification set, and a test set. Students in the training set do not appear in the verification/test set. A sample including an interaction record of a student i is divided into a candidate question set ( $\mathcal{D}_c^i$, 80%) and a meta-question set ( $\mathcal{D}_m^i$, 20%). The two sets are different for all the students, and are randomly generated in each training round to prevent overfitting. An experimental result is obtained through averaging for five times. All experimental results are obtained from the test set. Static algorithms such as Random, MFI, KLI, and MAAT, and learnable algorithms such as BOBCAT and NCAT are compared.

Evaluation indicators may be set as follows:

Quality indicator: Prediction accuracy of a final capability evaluation value of the student i in the meta-question set thereof may be calculated. Therefore, in this application, an area under a ROC curve (Area Under ROC Curve, AUC) and accuracy (Accuracy, ACC) are used as quality indicators.

Diversity indicator: Diversity may be measured based on knowledge point coverage (Cov). Specifically, $\mathcal{K}$ is set to a set of knowledge points, and $\mathcal{K}_t$ is a set of knowledge points contained in all selected test questions before the step t. Cov is defined as a proportion of the knowledge points contained in all the selected test questions.

$$Cov = \frac{1}{|K|} \sum_{k \in K} \mathbb{1}(k \in \mathcal{K}_t)$$

Novelty indicator: Novelty may be measured based on an exposure rate of a test question (for example, a proportion of a quantity of times the question is selected) and an average overlap rate (average overlap between test questions selected by any two students in all the students).

$$\text{Exposure}_q = \frac{N_q}{|\mathcal{U}|}$$

$$\text{Overlap} = \frac{\sum \sum_{i,j \in \mathcal{U}, j \neq i} |Q_i \bigcap Q_j|}{|\mathcal{U}| * (|\mathcal{U}| - 1)/2}$$

Herein, $N_q$ is a count of times that a question q is selected, $\mathcal{U}$ is a set of all the students, and $Q_i$ is a set of questions for the student i during testing.

Table 2 shows final quality indicator output effect.

| Dataset | | Eedi | | | | | | ASSIST | | | | | | Junyi | | | | | |
|---|---|---|---|---|---|---|---|---|---|---|---|---|---|---|---|---|---|---|---|
| CDM | | IRT | | | NCD | | | IRT | | | NCD | | | IRT | | | NCD | | |
| Metric | | AUC | | | | | | AUC | | | | | | AUC | | | | | |
| Step | | 5 | 10 | 20 | 5 | 10 | 20 | 5 | 10 | 20 | 5 | 10 | 20 | 5 | 10 | 20 | 5 | 10 | 20 |
| Static | Random | 68.38 | 69.73 | 71.98 | 68.45 | 70.24 | 72.98 | 67.68 | 67.89 | 68.43 | 67.73 | 68.51 | 69.70 | 76.72 | 76.99 | 77.44 | 76.80 | 77.06 | 77.47 |
| | MFI | 68.92 | 70.41 | 72.66 | - | - | - | 67.95 | 68.42 | 69.26 | - | - | - | 77.03 | 77.48 | 78.16 | - | - | - |
| | KLI | 68.69 | 70.29 | 72.60 | - | - | - | 67.92 | 68.39 | 69.23 | - | - | - | 76.98 | 77.43 | 78.14 | - | - | - |
| | MAAT | 69.09 | 70.90 | 73.19 | 69.03 | 71.03 | 73.75 | 68.24 | 68.82 | 69.70 | 67.96 | 69.38 | 71.17 | 76.93 | 77.39 | 78.21 | 77.07 | 77.53 | 78.40 |
| Learnable | BOBCAT | 68.94 | 70.50 | 73.24 | 69.17 | 71.44 | 74.51 | 68.65 | 69.44 | 70.97 | 69.50 | 70.63 | 71.80 | 77.81 | 78.70 | 79.17 | 77.47 | 78.21 | 79.46 |
| | NCAT | 69.04 | 70.78 | 73.32 | 69.09 | 71.45 | 74.55 | 68.67 | 69.49 | 71.06 | 69.28 | 70.93 | 71.68 | 77.96 | 78.87 | 79.13 | 77.63 | 78.41 | 79.56 |
| | GMOCAT | 69.81* | 71.78* | 74.19* | 71.25* | 73.76* | 75.76* | 69.13* | 70.38* | 71.91* | 69.95* | 71.26* | 72.95* | 78.68* | 80.00* | 80.24* | 78.07* | 79.00* | 80.30* |
| Metric | | ACC | | | | | | ACC | | | | | | ACC | | | | | |
| Step | | 5 | 10 | 20 | 5 | 10 | 20 | 5 | 10 | 20 | 5 | 10 | 20 | 5 | 10 | 20 | 5 | 10 | 20 |
| Static | Random | 63.52 | 64.36 | 65.91 | 63.45 | 64.83 | 66.70 | 64.50 | 64.75 | 65.21 | 65.71 | 66.29 | 67.15 | 72.66 | 73.07 | 73.67 | 73.81 | 74.00 | 74.36 |
| | MFI | 63.79 | 64.63 | 65.92 | - | - | - | 64.83 | 65.34 | 66.19 | - | - | - | 72.88 | 73.34 | 73.98 | - | - | - |
| | KLI | 63.54 | 64.44 | 65.85 | - | - | - | 64.75 | 65.29 | 66.16 | - | - | - | 72.87 | 73.33 | 73.97 | - | - | - |
| | MAAT | 63.25 | 64.38 | 66.15 | 63.86 | 64.58 | 66.71 | 65.56 | 66.30 | 67.57 | 66.57 | 67.84 | 69.52 | 73.73 | 74.51 | 75.48 | 74.31 | 74.88 | 75.38 |
| Learnable | BOBCAT | 63.91 | 64.90 | 66.97 | 63.95 | 65.62 | 67.69 | 65.37 | 66.21 | 67.88 | 67.55 | 68.63 | 69.94 | 74.21 | 75.66 | 76.51 | 74.42 | 75.21 | 76.45 |
| | NCAT | 64.04 | 64.97 | 66.92 | 64.00 | 65.59 | 67.84 | 65.34 | 66.32 | 68.36 | 67.15 | 68.38 | 69.44 | 74.74 | 76.05 | 75.70 | 74.64 | 75.47 | 76.40 |
| | GMOCAT | 64.42* | 65.70* | 67.49* | 65.53* | 67.36* | 68.96* | 66.16* | 67.42* | 69.02* | 67.63* | 68.55* | 70.18* | 75.01* | 76.68* | 77.37* | 74.84* | 75.83* | 77.16* |

Table 2

Herein, metric represents a measurement unit, static represents a static selection algorithm, and learnable represents a learnable selection algorithm.

Therefore, on two different CDMs of each of the three public datasets, the output effect of the solution provided in this application is better than that of all baselines. These results indicate that the relationship information and the multi-objective policy can improve accuracy of capability evaluation.

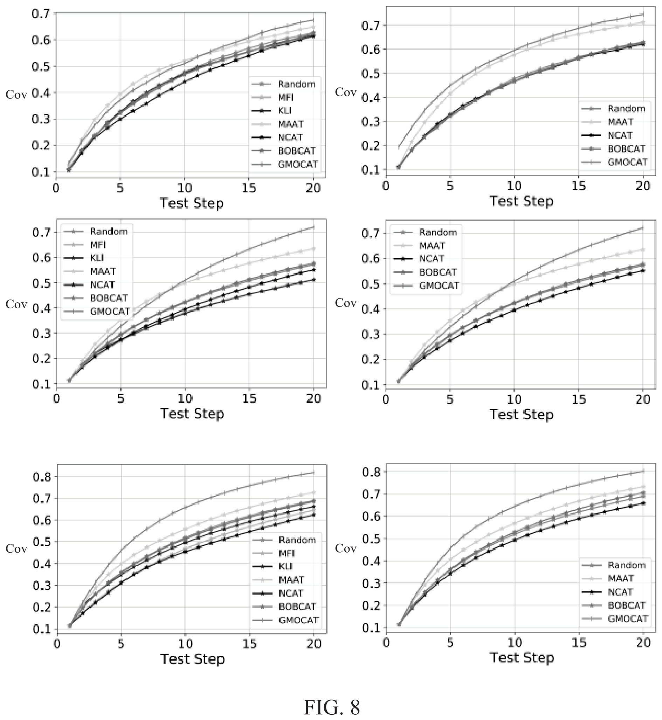

FIG. 8 may show output effect of the diversity indicator.

It is obvious that, in the method provided in this application, there are clear diversity objective and a relationship-aware selection algorithm in an MORL framework, and Cov curves on all datasets of all two CDMs grow fastest.

Table 3 may show output results of the novelty indicator.

Table 3

| Dataset | | Junyi | | | |
|---|---|---|---|---|---|
| CDM | | IRT | | NCD | |
| Metric | | Exp.%(>0.2) | Over. % | Exp.%(>0.2) | Over.% |
| Random[a] | | 0.04 | 4.6 | 0.04 | 4.6 |
| Static | MFI | 0.18 | 6.62 | - | - |
| | KLI | 0.21 | 6.73 | - | - |
| | MAAT | 0.63 | 17.66 | 0.67 | 15.22 |
| Learnable | BOBCAT | 0.74 | 17.36 | 0.88 | 17.64 |
| | NCAT | 0.21 | 7.62 | 0.14 | 7.03 |
| | GMOCAT | **0.11*** | **5.13*** | **0.07*** | **4.86*** |

Although the random method has a lowest exposure rate, this does not mean that it is a best method. Because a randomly selected test question is not personalized at all, this violates an original intention of the CAT. The random method is listed here mainly to illustrate an actual lower limit of the exposure rate. In all the methods except random, GMOCAT provided in this application has a smallest exposure rate and overlap rate. This indicates effectiveness of the novelty reward. In contrast, the method provided by this application achieves a lower test question exposure rate directly based on the exposure rate as the optimization objective.

Therefore, in the method provided in this application, more comprehensive evaluation indicators are considered, and a new question-making policy and a new multi-objective reinforcement learning optimization method are proposed. A multi-objective reinforcement learning CAT question-making policy method that unifies three objectives: quality, diversity, and novelty is proposed. This achieves a trade-off among the objectives, and can flexibly adapt to different actual requirements. In addition, the relationship between the test question and the knowledge point is used to help select the question. The relationship-aware embedding is integrated into the question selection policy to improve question-making quality.

In addition, anonymized learning data is further collected from an education center. Details are shown in Table 4.

Table 4

| Selection algorithm | AUC@5 | AUC@10 | ACC@5 | ACC@10 |
|---|---|---|---|---|
| Random | 0.6044 | 0.6466 | 0.6063 | 0.6438 |
| **GMOCAT** | **0.6119** | **0.6533** | **0.6127** | **0.6481** |

Similarly, the GMOCAT model provided in this application is superior to all baselines. This further verifies effectiveness of the GMOCAT model. Therefore, this application also achieves a good result in an embodiment of a more complex industrial dataset. This is also because in comparison with an existing solution, in embodiments of this application, a network module of a graph attention mechanism is added to explore a correlation between a knowledge point and a test question and integrate a relationship-aware embedding into a question selection policy. Multi-objective optimization helps this application fully consider a plurality of factors to achieve a balance between objectives, thereby greatly improving recommendation accuracy.

Information about a relationship between a test question and a knowledge point is used to help select a question. Specifically, a relationship-aware embedding is used to integrate such relationship information into a selection policy. To illustrate effectiveness of the method, ablation experiment is used for verification in this application. Experimental results are shown in the following table (GMOCAT-R indicates that the relationship-aware embedding is deleted. This means that in this application, the relationship graph is ignored, and the relationship-aware embedding is replaced with an original embedding). It may be observed from FIG. 8 that important information about a relationship between a test question and a knowledge point is removed from GMOCAT-R, which greatly reduces performance of GMOCAT-R. Therefore, it is reasonable to capture related information to select a more appropriate test question.

Details are shown in Table 5.

Table 5

| Metric | AUC@20 | Cov@20 | Overlap@20 |
|---|---|---|---|
| GMOCAT | **0.8024*** | **0.8185*** | **0.0513*** |
| GMOCAT-R | 0.7999 | 0.7380 | 0.0599 |

Multi-objective optimization in CAT helps this application fully consider a plurality of factors to achieve a balance between objectives. Differences existing when GMOCAT focuses on three objective subsets are discussed, to explore roles of different objectives. A 1st element, a 2nd element, and a 3rd element of w correspond to the quality objective, the diversity objective, and the novelty objective respectively. The following w configuration can be used for an experiment:

$$\mathbf{w} \in \{[1, 1, 1], [1, 0, 0], [0, 1, 0], [0, 0, 1], [1, 1, 0], [1, 0, 1], [0, 1, 1]\}$$

Impact of existence/absence of each objective is mainly considered. Therefore, a value of w is 1 (representing existence) or 0 (representing absence).

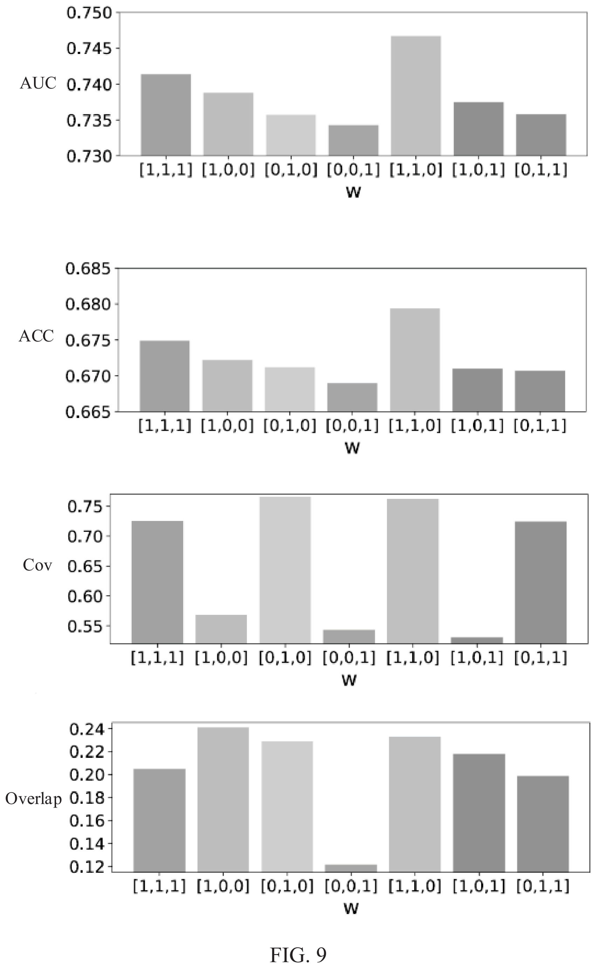

FIG. 9 may show comparison of performance of GMOCAT under different W configurations.

Obviously, focusing on only one objective deteriorates performance of other indicators. For example, a small coverage (Cov) value is obtained under [1, 0, 0]. A small AUC/ACC value is obtained under [0, 1, 0] and [0, 0, 1]. This indicates importance and necessity of using multiple objectives at the same time.

In the AUC indicator and the ACC indicator in FIG. 9, adding the diversity objective increases the AUC/ACC value (for example, [1, 1, 0] is superior to [1, 0, 0] in terms of AUC/ACC). This phenomenon is consistent with intuition since the capability of the student is diversified. If the test questions contain different knowledge points, the capability of the student can be predicted more accurately.

In the AUC indicator and the ACC indicator in FIG. 9, adding the novelty objective slightly weakens quality performance (for example, [1, 1, 0] is superior to [1, 1, 1] in terms of AUC/ACC). This phenomenon indicates that there is a potential conflict between the quality objective and the novelty objective. The novelty objective attempts to achieve balanced distribution of the test questions, resulting in more frequent selection of a low-quality question, and preventing prediction of the capability of the student.

Obviously, the three objectives are both complementary and contradictory. This application provides a flexible manner to adapt to requirements in different scenarios.

The foregoing describes the detailed procedure of the method provided in this application. The following describes an apparatus provided in this application for performing the foregoing method procedure.

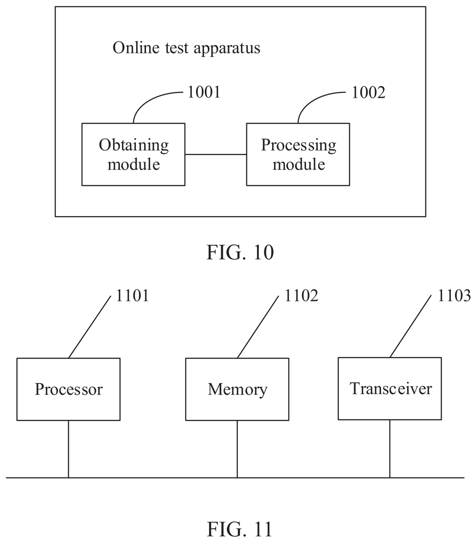

FIG. 10 is a diagram of a structure of an online test apparatus according to this application. The apparatus may include:

an obtaining module 1001, configured to obtain a test question library, where the test question library includes a plurality of collected test questions; and

a processing module 1002, configured to obtain a test model based on the test question library and a policy optimization algorithm, where the test model is used to select at least one test question from the test question library for a user, the test model includes a state encoder and a recommender, the state encoder is configured to obtain a difference between input test questions to generate a state code, the recommender is configured to output, based on the state code and an optimization objective, a test question selected for the user, the optimization objective includes at least one of novelty or diversity, a factor for measuring the novelty includes an exposure rate, and a factor for measuring the diversity includes whether there is an added knowledge point.

In a possible implementation, the optimization objective of the policy optimization algorithm includes a reward function in a plurality of dimensions that is used to update the test model.

In a possible implementation, the reward function in the plurality of dimensions includes quality, diversity, and novelty. The novelty indicates controlling an exposure rate of an output test question, and the diversity indicates that a plurality of output test questions contain a plurality of knowledge points. In other words, the test model may be optimized based on the exposure rate and knowledge point content of the test question to output a test question with novelty or diversity.

In a possible implementation, the processing module 1002 is specifically configured to: select the at least one test question from the test question library for the user via the test model; and perform reinforcement learning on the test model based on an answering record of the user for the at least one test question, to obtain the test model obtained through the reinforcement learning.

In a possible implementation, the obtaining module 1001 is further configured to: obtain the answering record of the user for the at least one test question from the test question library; or receive online answering data obtained by performing an operation on the at least one test question by the user, and obtain the answering record of the user for the at least one test question based on the online answering data.

In a possible implementation, the test model further includes a relationship-aware aggregator, an input of the relationship-aware aggregator includes at least one of a prerequisite graph or a correlation graph, the relationship-aware aggregator is configured to obtain an embedding representation of a relationship between knowledge points or an embedding representation of a relationship between a test question and a knowledge point based on the at least one of the prerequisite graph or a correlation graph, the prerequisite graph represents a sequential relationship between knowledge points in an input test question, and the correlation graph represents a correlation relationship between a test question and a knowledge point. The state encoder is configured to: extract an association relationship between a test question and a knowledge point based on data output by the relationship-aware aggregator, and generate the state code based on the association relationship.

In a possible implementation, the reward function in the plurality of dimensions includes a function corresponding to at least one of a quality reward, a diversity reward, or a novelty reward. The quality reward is determined based on output accuracy of testing of the test model in the test question library. The diversity reward is determined based on whether a new knowledge point is added to a test question selected by the test model from the test question library for a current time relative to a test question selected by the test model from the test question library for at least one previous time. The novelty reward is determined based on whether the test question selected by the test model from the test question library for the current time is a hot test question. The test question in the test question library is classified into the hot test question and a non-hot test question, and a quantity of historical selection times of the hot test question is greater than a quantity of historical selection times of the non-hot test question.

In a possible implementation, the test question library is divided into a candidate set and a meta-question set, the test question selected for the user is a test question in the candidate set, the test question selected for the user is further used to train the test model, and the meta-question set is used to calculate a reward in the plurality of dimensions.

The reinforcement learning includes a training phase and a test phase. The candidate set is used to train the test model in the training phase, and the meta-question set is used to calculate the reward in the plurality of dimensions in the test phase.

In a possible implementation, the reinforcement learning includes: in the test phase, selecting the at least one test question from the candidate set via the test model, and after receiving a response of the user to the at least one test question, obtaining a capability evaluation value based on the response of the user to the at least one test question, where the capability evaluation value represents a degree of correctness of answering, by the user, a test question filtered for the user; and in the verification phase, calculating a reward in the plurality of dimensions based on the capability evaluation value and the verification set, and updating the test model based on the reward in the plurality of dimensions, to obtain the test model obtained through current iterative learning.

In a possible implementation, the processing module 1002 is specifically configured to: perform supervised learning based on the test question library, to obtain the test model. The test question library includes label data labeled with the diversity and/or the novelty. The supervised learning includes performing supervised learning on an initial test model based on the label data, to obtain the trained test model.

In a possible implementation, the state encoder is specifically configured to obtain the difference between the input test questions and at least one capability evaluation value corresponding to user to generate the state code.

FIG. 11 is a diagram of a structure of another online test apparatus according to this application. Details are as follows.

The online test apparatus may include a processor 1101 and a memory 1102. The processor 1101 and the memory 1102 are interconnected through a line. The memory 1102 stores program instructions and data.

The memory 1102 stores the program instructions and the data that correspond to the steps in FIG. 4 to FIG. 9.

The processor 1101 is configured to perform the method steps performed by the online test apparatus shown in any one of the embodiments in FIG. 4 to FIG. 9.

Optionally, the online test apparatus may further include a transceiver 1103, configured to receive or send data.

Optionally, the online test apparatus shown in FIG. 11 is a chip.

An embodiment of this application further provides an online test apparatus. The online test apparatus may also be referred to as a digital processing chip or a chip. The chip includes a processing unit and a communication interface. The processing unit obtains program instructions through the communication interface, and when the program instructions are executed by the processing unit, the processing unit is configured to perform the method steps performed by the online test apparatus in any one of the embodiments in FIG. 4 to FIG. 9.

An embodiment of this application further provides a computer-readable storage medium. The computer-readable storage medium stores a program used to generate a vehicle travel speed. When the program is run on a computer, the computer is enabled to perform the steps in the methods described in the embodiments in FIG. 4 to FIG. 9.

An embodiment of this application further provides a digital processing chip. A circuit and one or more interfaces that are configured to implement the processor 1101 or a function of the processor 1101 are integrated into the digital processing chip. When a memory is integrated into the digital processing chip, the digital processing chip may implement the method steps in any one or more embodiments in the foregoing embodiments. When a memory is not integrated into the digital processing chip, the digital processing chip may be connected to an external memory through a communication interface. The digital processing chip implements, based on program code stored in the external memory, the steps in the foregoing embodiments.

An embodiment of this application further provides a computer program product. When the computer program product runs on a computer, the computer is enabled to perform the steps performed by the layout policy generation apparatus in the methods described in the embodiments shown in FIG. 4 to FIG. 9.

Optionally, the foregoing memory or storage unit may be a storage unit in a chip, for example, a register or a cache. Alternatively, the memory or storage unit may be a storage unit, such as a read-only memory (read-only memory, ROM), another type of static storage device that can store static information and instructions, or a random access memory (random access memory, RAM), in a wireless access device but outside the chip.

Specifically, the processing unit or the processor may be a central processing unit (central processing unit, CPU), a neural-network processing unit (neural-network processing unit, NPU), a graphics processing unit (graphics processing unit, GPU), a digital signal processor (digital signal processor, DSP), an application-specific integrated circuit (application-specific integrated circuit, ASIC), a field programmable gate array (field programmable gate array, FPGA), another programmable logic device, a discrete gate or a transistor logic device, a discrete hardware component, or the like. A general-purpose processor may be a microprocessor, any conventional processor, or the like.

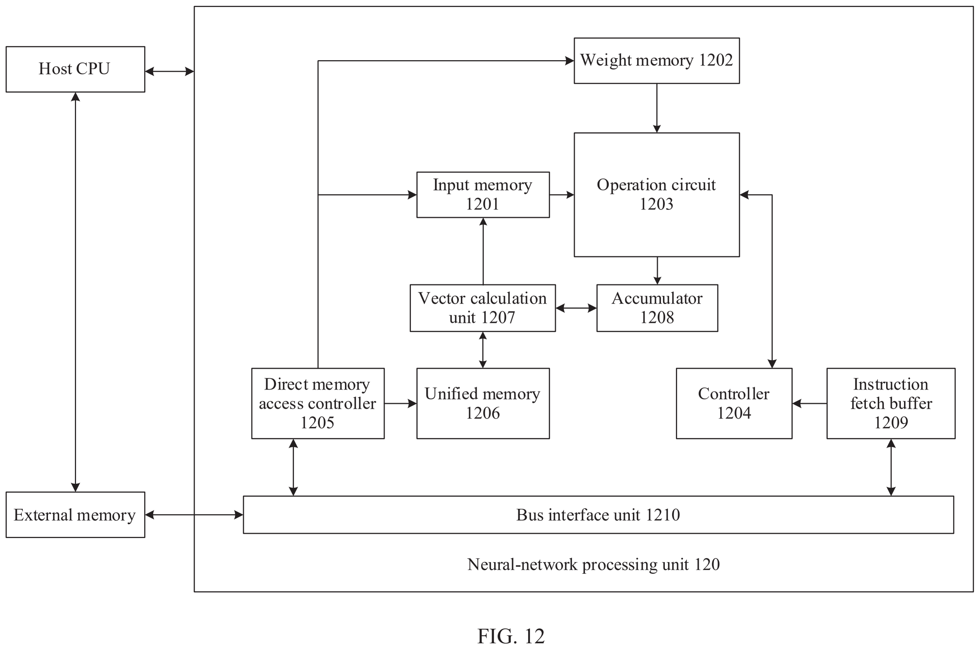

For example, FIG. 12 is a diagram of a structure of a chip according to an embodiment of this application. The chip may be represented as a neural-network processing unit NPU 120. The NPU 120 is mounted to a host CPU (Host CPU) as a coprocessor, and the host CPU allocates a task. A core part of the NPU is an operation circuit 1203, and a controller 1204 controls the operation circuit 1203 to extract matrix data in a memory and perform a multiplication operation.

In some implementations, the operation circuit 1203 includes a plurality of processing units (process engine, PE) inside. In some implementations, the operation circuit 1203 is a two-dimensional systolic array. The operation circuit 1203 may alternatively be a one-dimensional systolic array or another electronic circuit capable of performing mathematical operations such as multiplication and addition. In some implementations, the operation circuit 1203 is a general-purpose matrix processor.

For example, it is assumed that there are an input matrix A, a weight matrix B, and an output matrix C. The operation circuit fetches, from a weight memory 1202, data corresponding to the matrix B, and buffers the data on each PE in the operation circuit. The operation circuit fetches data of the matrix A from an input memory 1201, to perform a matrix operation on the matrix B, and stores an obtained partial result or an obtained final result of the matrix into an accumulator (accumulator) 1208.

A unified memory 1206 is configured to store input data and output data. The weight data is directly transferred to the weight memory 1202 via a direct memory access controller (direct memory access controller, DMAC) 1205. The input data is also transferred to the unified memory 1206 through the DMAC.

A bus interface unit (bus interface unit, BIU) 1210 is configured to interact with the DMAC and an instruction fetch buffer (instruction fetch buffer, IFB) 1209 through an AXI bus.

The bus interface unit (bus interface unit, BIU) 1210 is used by the instruction fetch buffer 1209 to obtain instructions from an external memory, and is further used by the direct memory access controller 1205 to obtain raw data of the input matrix A or the weight matrix B from the external memory.

The DMAC is mainly configured to transfer input data in the external memory DDR to the unified memory 1206, transfer weight data to the weight memory 1202, or transfer input data to the input memory 1201.

A vector calculation unit 1207 includes a plurality of operation processing units; and if necessary, performs further processing such as vector multiplication, vector addition, an exponential operation, a logarithmic operation, or value comparison on an output of the operation circuit. The vector calculation unit is mainly configured to perform network calculation, such as batch normalization (batch normalization), pixel-level summation, and upsampling on a feature map, at a non-convolutional/fully connected layer in a neural network.

In some implementations, a processed vector output by the vector calculation unit 1207 can be stored into the unified memory 1206. For example, the vector calculation unit 1207 may apply a linear function or a nonlinear function to the output of the operation circuit 1203, for example, perform linear interpolation on a feature map extracted at the convolutional layer, for another example, add value vectors, to generate an activation value. In some implementations, the vector calculation unit 1207 generates a normalized value, a pixel-level summation value, or both a normalized value and a pixel-level summation value. In some implementations, the processed output vector can be used as an activation input to the operation circuit 1203, for example, used in a subsequent layer in the neural network.

The instruction fetch buffer (instruction fetch buffer) 1209 connected to the controller 1204 is configured to store instructions used by the controller 1204.

The unified memory 1206, the input memory 1201, the weight memory 1202, and the instruction fetch buffer 1209 are all on-chip memories. The external memory is private to a hardware architecture of the NPU.

An operation at each layer in the recurrent neural network may be performed by the operation circuit 1203 or the vector calculation unit 1207.

The processor mentioned above may be a general-purpose central processing unit, a microprocessor, an ASIC, or one or more integrated circuits for controlling program execution of the methods in FIG. 4 to FIG. 9.

In addition, it should be noted that the described apparatus embodiments are merely examples. The units described as separate parts may or may not be physically separate, and parts displayed as units may or may not be physical units, may be located in one position, or may be distributed on a plurality of network units. Some or all the modules may be selected according to actual requirements to achieve objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, like a floppy disk, a USB flash drive, a removable hard disk, a read-only memory (read-only memory, ROM), a random access memory (random access memory, RAM), a magnetic disk, or an optical disc of a computer, and includes several instructions for instructing a computer device (which may be a personal computer, a server, a network device, or the like) to perform the methods described in embodiments of this application.

All or some of the foregoing embodiments may be implemented by software, hardware, firmware, or any combination thereof. When the software is used for implementation, all or some of embodiments may be implemented in a form of a computer program product.

The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

**Claims**

1. An online test method, comprising:

   obtaining a test question library, wherein the test question library comprises a plurality of test questions; and obtaining a test model based on the test question library and a policy optimization algorithm, wherein the test model is used to select at least one test question from the test question library, the test model comprises a state encoder and a recommender, the state encoder is configured to generate a state code based on a difference between test questions, the recommender is configured to output a test question based on the state code and an optimization objective, the optimization objective comprises at least one of novelty or diversity, a factor for measuring the novelty comprises an exposure rate, and a factor for measuring the diversity comprises whether there is an added knowledge point.

2. The method according to claim 1, wherein the optimization objective of the policy optimization algorithm comprises a reward function used to update the test model.

3. The method according to claim 2, wherein the reward function is a reward function in a plurality of dimensions, and the reward function in the plurality of dimensions comprises at least two of quality, diversity, and novelty.

4. The method according to claim 3, wherein
   the reward function in the plurality of dimensions comprises a quality reward, a diversity reward, and/or a novelty reward, wherein the quality reward is determined based on output accuracy of testing of the test model in the test question library, the diversity reward is determined based on whether a new knowledge point is added to a test question selected by the test model from the test question library for a current time relative to a test question selected by the test model from the test question library for at least one previous time, the novelty reward is determined based on whether the test question selected by the test model from the test question library for the current time is a hot test question, the test question in the test question library is classified into the hot test question and a non-hot test question, and a quantity of historical selection times of the hot test question is greater than a quantity of historical selection times of the non-hot test question.

5. The method according to any one of claims 1 to 4, wherein

   the test model further comprises a relationship-aware aggregator, an input of the relationship-aware aggregator comprises at least one of a prerequisite graph or a correlation graph, the relationship-aware aggregator is configured to obtain an embedding representation of a relationship between knowledge points or an embedding representation of a relationship between a test question and a knowledge point based on the input, the prerequisite graph represents a sequential relationship between knowledge points in an input test question, and the correlation graph represents a correlation relationship between a test question and a knowledge point;

and

the state encoder is configured to: extract an association relationship between a test question and a knowledge point based on data output by the relationship-aware aggregator, and generate the state code based on the association relationship.

6. The method according to any one of claims 1 to 5, wherein obtaining the test model based on the test question library and the policy optimization algorithm comprises:

selecting the at least one test question from the test question library via the test model; and
performing reinforcement learning on the test model based on an answering record of the at least one test question, to obtain the test model obtained through the reinforcement learning.

7. The method according to claim 6, wherein the method further comprises:

obtaining the answering record of the at least one test question from the test question library; or
receiving online answering data obtained by performing an operation on the at least one test question by a user, and obtaining the answering record of the at least one test question based on the online answering data.

8. The method according to any one of claims 1 to 7, wherein the test question library is divided into a candidate set and a meta-question set, the test question selected by the test model is a test question in the candidate set, the test question selected by the test model is further used to train the test model, and the meta-question set is used to calculate a reward in the plurality of dimensions; and

the policy optimization algorithm comprises reinforcement learning, the reinforcement learning comprises a test phase and a verification phase, the candidate set is used to train the test model in the test phase, and the meta-question set is used to calculate the reward in the plurality of dimensions in the verification phase.

9. The method according to claim 7, wherein the reinforcement learning comprises:

in the test phase, selecting the at least one test question from the candidate set via the test model, and after receiving a response to the at least one test question, obtaining a capability evaluation value based on the response to the at least one test question, wherein the capability evaluation value represents a degree of correctness of answering the test question; and
in the verification phase, calculating a reward in the plurality of dimensions based on the capability evaluation value and the verification set, and updating the test model based on the reward in the plurality of dimensions, to obtain the test model obtained through current iterative learning.

10. The method according to any one of claims 1 to 5, wherein obtaining the test model based on the test question library and the policy optimization algorithm comprises:
performing supervised learning based on the test question library, to obtain the test model, wherein the test question library comprises label data labeled with the diversity and/or the novelty, and the supervised learning comprises performing supervised learning on an initial test model based on the label data, to obtain the trained test model.

11. The method according to any one of claims 1 to 10, wherein the state encoder is specifically configured to obtain the difference between the input test questions and at least one capability evaluation value to generate the state code.

12. An online test apparatus, comprising:

an obtaining module, configured to obtain a test question library, wherein the test question library comprises a plurality of collected test questions; and
a processing module, configured to obtain a test model based on the test question library and a policy optimization algorithm, wherein the test model is used to select at least one test question from the test question library, the test model comprises a state encoder and a recommender, the state encoder is configured to obtain a difference between input test questions to generate a state code, the recommender is configured to output a test question based on the state code and an optimization objective, the optimization objective comprises at least one of novelty or diversity, a factor for measuring the novelty comprises an exposure rate, and a factor for measuring the diversity comprises whether there is an added knowledge point.

13. The apparatus according to claim 12, wherein the optimization objective of the policy optimization algorithm comprises a reward function used to update the test model.

**14.** The apparatus according to claim 13, wherein the reward function is a reward function in a plurality of dimensions, and the reward function in the plurality of dimensions comprises at least two of quality, diversity, and novelty.

**15.** An online test apparatus, comprising a processor, wherein the processor is coupled to a memory, the memory stores a program, and when program instructions stored in the memory are executed by the processor, the method according to any one of claims 1 to 11 is implemented.

**16.** A computer-readable storage medium, comprising a program, wherein when the program is executed by a processing unit, the method according to any one of claims 1 to 11 is performed.

**17.** An apparatus, comprising a processing unit and a communication interface, wherein the processing unit obtains program instructions through the communication interface, and when the program instructions are executed by the processing unit, the method according to any one of claims 1 to 11 is implemented.

**18.** A computer program product, comprising a computer program/instructions, wherein when the computer program/instructions are executed by a processor, steps of the method according to any one of claims 1 to 11 are implemented.

State s(t+1)

Action a(t)

Reward r(t)

State s(t)

Decision model

Agent

Environment

FIG. 1

Education platform

Test question

Communication network

Client

Examples

FIG. 2

FIG. 3

FIG. 4

FIG. 5

EP 4 718 332 A1

Correlation relationship graph

Addition          Multiplication

$c_1$          $c_2$

$q_1$          $q_2$

2+3*5          4*9

Prerequisite relationship graph

Multiplication

$c_1$

$c_2$          $c_3$

Addition          Product

Test question

Knowledge point

Correlation relationship

Prerequisite relationship

## FIG. 6

Candidate set

$Q_9$   $Q_3$   $Q_1$   $Q_5$   ...

Meta-question set

$Q_7$   $Q_2$

Select a selection algorithm

Update a capability evaluation value

Calculate and feed back algorithm selection

Training phase

Train the selection algorithm

Candidate set

$Q_9$   $Q_3$   $Q_1$   $Q_5$   ...

Meta-question set

$Q_7$   $Q_2$

Select a selection algorithm

Update a capability evaluation value

Evaluate accuracy of the capability evaluation value

Test phase

## FIG. 7

FIG. 8

FIG. 9

Online test apparatus

1001                                              1002

| Obtaining module | | Processing module |

FIG. 10

1101                            1102                            1103

| Processor |        | Memory |        | Transceiver |

FIG. 11

| | |
|---|---|
| Host CPU | Weight memory 1202 |

Input memory 1201

Operation circuit 1203

Vector calculation unit 1207

Accumulator 1208

Direct memory access controller 1205

Unified memory 1206

Controller 1204

Instruction fetch buffer 1209

External memory

Bus interface unit 1210

Neural-network processing unit 120

FIG. 12

## INTERNATIONAL SEARCH REPORT

| International application No. |
|---|
| **PCT/CN2024/090884** |

| A. | CLASSIFICATION OF SUBJECT MATTER |
|---|---|
| | G06N 3/092(2023.01)i |

According to International Patent Classification (IPC) or to both national classification and IPC

| B. | FIELDS SEARCHED |
|---|---|

Minimum documentation searched (classification system followed by classification symbols)

   IPC:G06N

Documentation searched other than minimum documentation to the extent that such documents are included in the fields searched

Electronic data base consulted during the international search (name of data base and, where practicable, search terms used)

   CNABS: CNTXT; VEN; WOTXT; EPTXT; CNKI; USTXT; IEEE: 题库, 出题, 强化学习, 状态编码, 奖励, 新颖性, 多样性, 图谱, question bank, question setting, reinforcement learning, state encoding, rewards, novelty, diversity, graph

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 117436503 A (HUAWEI TECHNOLOGIES CO., LTD.) 23 January 2024 (2024-01-23) description, paragraphs 4-38 | 1-18 |
| X | CN 114372151 A (BEIKE ZHAOFANG (BEIJING) TECHNOLOGY CO., LTD.) 19 April 2022 (2022-04-19) description, paragraphs 125-250 | 1-3, 5-18 |
| X | CN 111813921 A (ZHEJIANG XUEHAI EDUCATION TECHNOLOGY CO., LTD.) 23 October 2020 (2020-10-23) description, paragraphs 4-14 | 1-3, 5-18 |
| A | CN 113779396 A (PING AN TECHNOLOGY (SHENZHEN) CO., LTD.) 10 December 2021 (2021-12-10) description, paragraphs 106-130 | 1-18 |
| A | KR 102265573 B1 (TEAMGIWONMATH) 16 June 2021 (2021-06-16) entire document | 1-18 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 July 2024** | **27 July 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/090884**

| Patent document cited in search report | | | Publication date (day/month/year) | Patent family member(s) | | | Publication date (day/month/year) |
|---|---|---|---|---|---|---|---|
| CN | 117436503 | A | 23 January 2024 | None | | | |
| CN | 114372151 | A | 19 April 2022 | CN | 114372151 | B | 30 April 2024 |
| CN | 111813921 | A | 23 October 2020 | CN | 111813921 | B | 22 December 2020 |
| CN | 113779396 | A | 10 December 2021 | CN | 113779396 | B | 01 September 2023 |
| KR | 102265573 | B1 | 16 June 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310802114